# EUROPEAN PATENT APPLICATION

(11) **EP 2 703 422 A1**
(43) Date of publication of application: **05.03.2014**
(21) Application number: 13182243.9
(22) Date of filing: 29.08.2013
(51) Int. Cl.: C08G 18/79, C09J 175/04, C08G 18/48, C08G 18/50, C08G 18/22

(54) **Urethane-based pressure-sensitive adhesive and surface protective film using the pressure-sensitive adhesive**

(30) Priority: 31.08.2012 JP 2012191609; 06.11.2012 JP 2012244075; 29.01.2013 JP 2013014312
(71) Applicant: NITTO DENKO CORPORATION, Ibaraki-shi, Osaka 567-8680 (JP)
(72) Inventor: Sasaki, Shogo, Ibaraki-shi, Osaka 567-8680 (JP); Iseki, Toru, Ibaraki-shi, Osaka 567-8680 (JP); Jo, Souya, Ibaraki-shi, Osaka 567-8680 (JP); Uchida, Shou, Ibaraki-shi, Osaka 567-8680 (JP); Sawazaki, Ryohei, Ibaraki-shi, Osaka 567-8680 (JP); Ando, Masahiko, Ibaraki-shi, Osaka 567-8680 (JP)
(74) Representative: Grünecker, Kinkeldey, Stockmair & Schwanhäusser

(57) **Abstract**

Provided is a urethane-based pressure-sensitive adhesive that is excellent in reworkability, initial wettability, and transparency, and is preferably excellent in adhesive residue-preventing property, that preferably has a large wetting rate, and that is preferably prevented from showing external appearance unevenness due to orange peel. Also provided is a surface protective film using such urethane-based pressure-sensitive adhesive in its pressure-sensitive adhesive layer, the surface protective film being excellent in reworkability, initial wettability, and transparency, and being preferably excellent in adhesive residue-preventing property, the surface protective film preferably having a large wetting rate, and the surface protective film being preferably prevented from showing external appearance unevenness due to orange peel. Further provided is an optical member or electronic member to which such surface protective film is attached. The urethane-based pressure-sensitive adhesive of the present invention is a urethane-based pressure-sensitive adhesive including a polyurethane-based resin, in which: the polyurethane-based resin includes a polyurethane-based resin obtained by curing a composition containing a polyol (A) and a polyfunctional isocyanate compound (B); and the polyol (A) contains a polyol (A1) having 3 OH groups and a number-average molecular weight Mn of 8,000 to 20,000.

## Description

### BACKGROUND OF THE INVENTION

### 1. Field of the Invention

The present invention relates to a urethane-based pressure-sensitive adhesive. Despite the fact that the urethane-based pressure-sensitive adhesive of the present invention is a urethane-based pressure-sensitive adhesive whose adhesion is generally known to rise with time to a high degree, the pressure-sensitive adhesive is excellent in reworkability and is extremely excellent in initial wettability. For example, when the urethane-based pressure-sensitive adhesive of the present invention is attached to an adherend immediately after the peeling of a separator, the inclusion of air bubbles can be effectively suppressed because the pressure-sensitive adhesive is extremely excellent in initial wettability. The present invention also relates to a surface protective film that uses such urethane-based pressure-sensitive adhesive. The surface protective film of the present invention includes a base material layer and a pressure-sensitive adhesive layer, and is preferably used in, for example, an application in which the film is attached to a surface of an optical member or an electronic member to protect the surface.

### 2. Description of the Related Art

Optical members and electronic members such as an LCD, an organic EL display, a touch panel using such display, a lens portion of a camera, and an electronic device may each have a surface protective film attached generally onto an exposed surface side thereof in order to, for example, prevent a flaw from occurring on a surface thereof upon processing, assembly, inspection, transportation, or the like. Such surface protective film is peeled from the optical member or the electronic member when the need for surface protection is eliminated.

In more and more cases, the same surface protective film is continuously used as such surface protective film, from a manufacturing step of the optical member or the electronic member, through an assembly step, an inspection step, a transportation step, and the like, until final shipping. In many of such cases, such surface protective film is attached, peeled off, and re-attached by manual work in each step.

When the surface protective film is attached by manual work, air bubbles may be trapped between an adherend and the surface protective film. Accordingly, there have been reported some technologies for improving wettability of a surface protective film so that air bubbles may not be trapped upon the attachment. For example, there is known a surface protective film that uses a silicone resin, which has a high wetting rate, in a pressure-sensitive adhesive layer. However, when the silicone resin is used in the pressure-sensitive adhesive layer, its pressure-sensitive adhesive component is liable to contaminate the adherend, resulting in a problem when the surface protective film is used for protecting a surface of a member for which particularly low contamination is required, such as the optical member or the electronic member.

As a surface protective film that causes less contamination derived from its pressure-sensitive adhesive component, there is known a surface protective film that uses an acrylic resin in a pressure-sensitive adhesive layer. However, the surface protective film that uses the acrylic resin in the pressure-sensitive adhesive layer is poor in wettability, and hence, when the surface protective film is attached by manual work, air bubbles may be trapped between the adherend and the surface protective film. In addition, when the acrylic resin is used in the pressure-sensitive adhesive layer, there is a problem in that an adhesive residue is liable to occur upon peeling, resulting in a problem when the surface protective film is used for protecting a surface of a member for which incorporation of foreign matter is particularly undesirable, such as the optical member or the electronic member.

As a surface protective film that is able to achieve both of excellent wettability, and low contamination property and adhesive residue reduction, there has recently been reported a surface protective film that uses a urethane-based pressure-sensitive adhesive in a pressure-sensitive adhesive layer (see, for example, Japanese Patent Application Laid-open No. 2006-182795).

However, a conventional urethane-based pressure-sensitive adhesive involves a problem in that the pressure-sensitive adhesive is poor in initial wettability. Accordingly, for example, when the conventional urethane-based pressure-sensitive adhesive is attached to an adherend immediately after the peeling of a separator, the following problem arises. Air bubbles are extremely liable to be included.

By the way, when the surface protective film is attached to an adherend by manual work, light-peeling property is required as well as excellent wettability such as the initial wettability as described above. This is because the surface protective film attached to an adherend is, after being peeled off, re-attached to an adherend to serve again as a surface protective film. Even with good wettability, the surface protective film deforms upon peeling of the surface protective film when the peeling is heavy, and thus the film cannot be used again as a surface protective film. In order to avoid such problem, the surface protective film to be used for an optical member or an electronic member is strongly required to have so-called reworkability of being able to be attached many times without trapping air bubbles and being able to be lightly peeled off without deforming. However, the conventional urethane-based pressure-sensitive adhesive that uses the polyurethane-based resin in the pressure-sensitive adhesive layer has a problem of poor reworkability because a adhesion of the conventional urethane-based pressure-sensitive adhesive has a high tendency to increase over time and hence peeling of the surface protective film that uses such conventional urethane-based pressure-sensitive adhesive in a pressure-sensitive adhesive layer becomes heavy after the film remains in a state of being attached to an adherend for a long period of time.

Further, with regard to a surface protective film to be used in the surface protection of an optical member or electronic member, optical characteristics need to be checked through the surface protective film in an inspection step or the like. Accordingly, the surface protective film to be used in the surface protection of an optical member or electronic member is required to have high transparency.

In addition, the conventional urethane-based pressure-sensitive adhesive may cause an adhesive residue. For example, when the pressure-sensitive adhesive is stored in a warmed state after having been attached to an adherend, the following problem arises. The adhesive residue is liable to occur on the adherend.

In addition, the wetting rate of the conventional urethane-based pressure-sensitive adhesive may not be large. In addition, in a surface protective film using the conventional urethane-based pressure-sensitive adhesive in its pressure-sensitive adhesive layer, external appearance unevenness may occur owing to orange peel.

### SUMMARY OF THE INVENTION

An object of the present invention is to provide a urethane-based pressure-sensitive adhesive that is excellent in reworkability, initial wettability, and transparency, and is preferably excellent in adhesive residue-preventing property, that preferably has a large wetting rate, and that is preferably prevented from showing external appearance unevenness due to orange peel. Another object of the present invention is to provide a surface protective film using such urethane-based pressure-sensitive adhesive in its pressure-sensitive adhesive layer, the surface protective film being excellent in reworkability, initial wettability, and transparency, and being preferably excellent in adhesive residue-preventing property, the surface protective film preferably having a large wetting rate, and the surface protective film being preferably prevented from showing external appearance unevenness due to orange peel. Another object of the present invention is to provide an optical member or electronic member to which such surface protective film is attached.

The urethane-based pressure-sensitive adhesive of the present invention is a urethane-based pressure-sensitive adhesive including a polyurethane-based resin, in which:
the polyurethane-based resin includes a polyurethane-based resin obtained by curing a composition containing a polyol (A) and a polyfunctional isocyanate compound (B); and
the polyol (A) contains a polyol (A1) having 3 OH groups and a number-average molecular weight Mn of 8,000 to 20,000.

In a preferred embodiment, a content of the polyol (A1) in the polyol (A) is 70 wt% or more.

In a preferred embodiment, the polyol (A) contains a polyol (A2) having 3 or more OH groups and a number-average molecular weight Mn of 5,000 or less.

In a preferred embodiment, a content of the polyol (A2) in the polyol (A) is 30 wt% or less.

In a preferred embodiment, the polyurethane-based resin contains a deterioration-preventing agent.

In a preferred embodiment, a content of the deterioration-preventing agent with respect to the polyol (A) is 0.01 wt% to 10 wt%.

In a preferred embodiment, the polyurethane-based resin contains a fatty acid ester.

In a preferred embodiment, a content of the fatty acid ester with respect to the polyol (A) is 5 wt% to 50 wt%.

The surface protective film of the present invention is a surface protective film including:
a base material layer; and
a pressure-sensitive adhesive layer,
in which the pressure-sensitive adhesive layer contains the urethane-based pressure-sensitive adhesive of the present invention.

The optical member of the present invention has attached thereto the surface protective film of the present invention.

The electronic member of the present invention has attached thereto the surface protective film of the present invention.

### BRIEF DESCRIPTION OF THE DRAWINGS

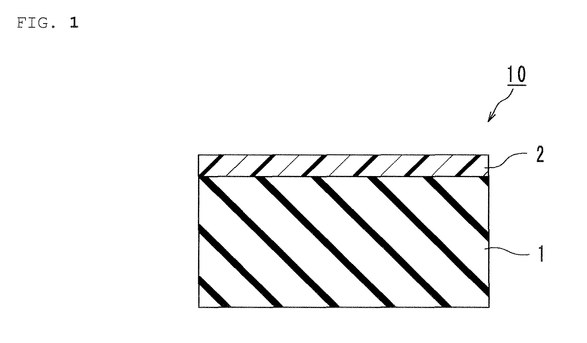

FIG. **1** is a schematic sectional view of a surface protective film according to a preferred embodiment of the present invention.

### DETAILED DESCRIPTION OF THE PREFERRED EMBODIMENTS

### <<A. Urethane-based pressure-sensitive adhesive>>

A urethane-based pressure-sensitive adhesive of the present invention contains a polyurethane-based resin. The content of the polyurethane-based resin in the urethane-based pressure-sensitive adhesive of the present invention is preferably 50 wt% to 100 wt%, more preferably 70 wt% to 100 wt%, still more preferably 90 wt% to 100 wt%, particularly preferably 95 wt% to 100 wt%, most preferably 98 wt% to 100 wt%. Adjusting the content of the polyurethane-based resin in the urethane-based pressure-sensitive adhesive of the present invention within the range can provide a urethane-based pressure-sensitive adhesive excellent in reworkability, initial wettability, and transparency.

The polyurethane-based resin is a polyurethane-based resin obtained by curing a composition containing a polyol (A) and a polyfunctional isocyanate compound (B).

The polyol (A) contains a polyol (A1) having 3 OH groups and a number-average molecular weight Mn of 8, 000 to 20, 000. The number of kinds of the polyols (A1) may be only one, or may be two or more.

The content of the polyol (A1) in the polyol (A) is preferably 70 wt% or more, more preferably 70 wt% to 100 wt%, still more preferably 70 wt% to 90 wt%, particularly preferably 70 wt% to 80 wt%. Adjusting the content of the polyol (A1) in the polyol (A) within the range can provide a urethane-based pressure-sensitive adhesive excellent in reworkability, initial wettability, and transparency. When the content of the polyol (A1) in the polyol (A) deviates from the range, in particular, the degree to which an adhesion rises with time may become high and hence it may become impossible to express excellent reworkability.

The polyol (A1) has a number-average molecular weight Mn of 8, 000 to 20, 000, preferably 8, 000 to 18, 000, more preferably 8, 500 to 17,000, still more preferably 9,000 to 16,000, particularly preferably 9,500 to 15,500, most preferably 10,000 to 15,000. Adjusting the number-average molecular weight Mn of the polyol (A1) within the range can provide a urethane-based pressure-sensitive adhesive excellent in reworkability, initial wettability, and transparency.

The polyol (A) may contain a polyol (A2) having 3 or more OH groups and a number-average molecular weight Mn of 5,000 or less. The number of kinds of the polyols (A2) may be only one, or may be two or more. The number-average molecular weight Mn of the polyol (A2) is preferably 500 to 5,000, more preferably 800 to 4, 500, still more preferably 1,000 to 4,000, particularly preferably 1,000 to 3,500, most preferably 1,000 to 3,000. When the number-average molecular weight Mn of the polyol (A2) deviates from the range, in particular, the degree to which an adhesion rises with time may become high and hence it may become impossible to express excellent reworkability. The polyol (A2) is preferably a polyol having 3 OH groups (triol), a polyol having 4 OH groups (tetraol), a polyol having 5 OH groups (pentaol), or a polyol having 6 OH groups (hexaol). The total amount of at least one kind of the polyol having 4 OH groups (tetraol), the polyol having 5 OH groups (pentaol), and the polyol having 6 OH groups (hexaol) as the polyol (A2) is preferably 10 wt% or less, more preferably 7 wt% or less, still more preferably 6 wt% or less, particularly preferably 5 wt% or less in terms of a content in the polyol (A). A urethane-based pressure-sensitive adhesive additionally excellent in transparency can be provided by adjusting the total amount of at least one kind of the polyol having 4 OH groups (tetraol), the polyol having 5 OH groups (pentaol), and the polyol having 6 OH groups (hexaol) as the polyol (A2) in the polyol (A) within the range.

The content of the polyol (A2) in the polyol (A) is preferably 30 wt% or less, more preferably 0 wt% to 30 wt%. Adjusting the content of the polyol (A2) in the polyol (A) within the range can provide a urethane-based pressure-sensitive adhesive excellent in reworkability, initial wettability, and transparency.

The content of a polyol having 4 or more OH groups and a number-average molecular weight Mn of 5,000 or less in the polyol (A2) is preferably less than 10 wt%, more preferably 8 wt% or less, still more preferably 7 wt% or less, particularly preferably 6 wt% or less, most preferably 5 wt% or less with respect to the entirety of the polyol (A). When the content of the polyol having 4 or more OH groups and a number-average molecular weight Mn of 5, 000 or less in the polyol (A2) is 10 wt% or more with respect to the entirety of the polyol (A), the urethane-based pressure-sensitive adhesive of the present invention becomes liable to whiten and hence its transparency may reduce.

Examples of the polyol (A) include a polyester polyol, a polyether polyol, a polycaprolactone polyol, a polycarbonate polyol, and a castor oil-based polyol.

The polyester polyol can be obtained by, for example, an esterification reaction between a polyol component and an acid component.

Examples of the polyol component include ethylene glycol, diethylene glycol, 1,3-butanediol, 1,4-butanediol, neopentyl glycol, 3-methyl-1,5-pentanediol, 2-butyl-2-ethyl-1,3-propanediol, 2,4-diethyl-1,5-pentanediol, 1,2-hexanediol, 1,6-hexanediol, 1,8-octanediol, 1,9-nonanediol, 2-methyl-1,8-octanediol, 1,8-decanediol, octadecanediol, glycerin, trimethylolpropane, pentaerythritol, hexanetriol, and polypropylene glycol.

Examples of the acid component include succinic acid, methylsuccinic acid, adipic acid, pimelic acid, azelaic acid, sebacic acid, 1,12-dodecanedioic acid, 1,14-tetradecanedioic acid, dimer acid, 2-methyl-1,4-cyclohexanedicarboxylic acid, 2-ethyl-1,4-cyclohexanedicarboxylic acid, terephthalic acid, isophthalic acid, phthalic acid, isophthalic acid, terephthalic acid, 1,4-naphthalenedicarboxylic acid, 4,4'-biphenyldicarboxylic acid, and acid anhydrides thereof.

Examples of the polyether polyol include a polyether polyol obtained by subjecting an alkylene oxide such as ethylene oxide, propylene oxide, or butylene oxide to addition polymerization through the use of an initiator such as water, a low-molecular-weight polyol (such as propylene glycol, ethylene glycol, glycerin, trimethylolpropane, or pentaerythritol), a bisphenol (such as bisphenol A), or dihydroxybenzene (such as catechol, resorcin, or hydroquinone). Specific examples thereof include polyethylene glycol, polypropylene glycol, and polytetramethylene glycol.

An example of the polycaprolactone polyol is a caprolactone-type polyester diol obtained by subjecting a cyclic ester monomer such as ε-caprolactone or σ-valerolactone to ring-opening polymerization.

Examples of the polycarbonate polyol include: a polycarbonate polyol obtained by subjecting the polyol component and phosgene to a polycondensation reaction; a polycarbonate polyol obtained by subjecting the polyol component and a carbonic acid diester such as dimethyl carbonate, diethyl carbonate, dipropyl carbonate, diisopropyl carbonate, dibutyl carbonate, ethylbutyl carbonate, ethylene carbonate, propylene carbonate, diphenyl carbonate, or dibenzyl carbonate to transesterification and condensation; a copolymerized polycarbonate polyol obtained by using two or more kinds of the polyol components in combination; a polycarbonate polyol obtained by subjecting each of the various polycarbonate polyols and a carboxyl group-containing compound to an esterification reaction; a polycarbonate polyol obtained by subjecting each of the various polycarbonate polyols and a hydroxyl group-containing compound to an etherification reaction; a polycarbonate polyol obtained by subjecting each of the various polycarbonate polyols and an ester compound to a transesterification reaction; a polycarbonate polyol obtained by subjecting each of the various polycarbonate polyols and a hydroxyl group-containing compound to a transesterification reaction; a polyester-type polycarbonate polyol obtained by subjecting each of the various polycarbonate polyols and a dicarboxylic acid compound to a polycondensation reaction; and a copolymerized polyether-type polycarbonate polyol obtained by subjecting each of the various polycarbonate polyols and an alkylene oxide to copolymerization.

An example of the castor oil-based polyol is a castor oil-based polyol obtained by allowing a castor oil fatty acid and the polyol component to react with each other. A specific example thereof is a castor oil-based polyol obtained by allowing a castor oil fatty acid and polypropylene glycol to react with each other.

The number of kinds of the polyfunctional isocyanate compounds (B) may be only one, or may be two or more.

Any appropriate polyfunctional isocyanate compound that may be used in a urethane-forming reaction may be adopted as the polyfunctional isocyanate compound (B). Examples of such polyfunctional isocyanate compound (B) include a polyfunctional aliphatic isocyanate compound, a polyfunctional alicyclic isocyanate compound, and a polyfunctional aromatic isocyanate compound.

Examples of the polyfunctional aliphatic isocyanate compound include trimethylene diisocyanate, tetramethylene diisocyanate, hexamethylene diisocyanate, pentamethylene diisocyanate, 1,2-propylene diisocyanate, 1,3-butylene diisocyanate, dodecamethylene diisocyanate, and 2,4,4-trimethylhexamethylene diisocyanate.

Examples of the polyfunctional alicyclic isocyanate compound include 1,3-cyclopentene diisocyanate, 1,3-cyclohexane diisocyanate, 1,4-cyclohexane diisocyanate, isophorone diisocyanate, hydrogenated diphenylmethane diisocyanate, hydrogenated xylylene diisocyanate, hydrogenated tolylene diisocyanate, and hydrogenated tetramethylxylylene diisocyanate.

Examples of the polyfunctional aromatic diisocyanate compound include phenylene diisocyanate, 2,4-tolylene diisocyanate, 2,6-tolylene diisocyanate, 2,2'-diphenylmethane diisocyanate, 4,4'-diphenylmethane diisocyanate, 4,4'-toluidine diisocyanate, 4,4'-diphenyl ether diisocyanate, 4,4'-diphenyl diisocyanate, 1,5-naphthalene diisocyanate, and xylylene diisocyanate.

Other examples of the polyfunctional isocyanate compound (B) include trimethylolpropane adducts of the various polyfunctional isocyanate compounds as described above, biurets thereof obtained through their reactions with water, and trimers thereof each having an isocyanurate ring. In addition, they may be used in combination.

The polyurethane-based resin is obtained by curing a composition containing the polyol (A) and the polyfunctional isocyanate compound (B). Such composition may contain any appropriate other component in addition to the polyol (A) and the polyfunctional isocyanate compound (B) as long as the effects of the present invention are not impaired. Examples of such other component include a catalyst, a resin component other than the polyurethane-based resin, a tackifier, an inorganic filler, an organic filler, metal powder, a pigment, a foil-shaped material, a softener, a plasticizer, an age resistor, a conductive agent, an antioxidant, a UV absorbing agent, a light stabilizer, a surface lubricating agent, a leveling agent, a corrosion inhibitor, a heat stabilizer, a polymerization inhibitor, a lubricant, and a solvent.

The polyurethane-based resin preferably contains a deterioration-preventing agent such as an antioxidant, a UV absorbing agent, or a light stabilizer. When the polyurethane-based resin contains the deterioration-preventing agent, the pressure-sensitive adhesive can be excellent in adhesive residue-preventing property. Specifically, even when the pressure-sensitive adhesive is stored in a warmed state after having been attached to an adherend, an adhesive residue hardly occurs on the adherend. The number of kinds of the deterioration-preventing agents may be only one, or may be two or more. The deterioration-preventing agent is particularly preferably an antioxidant.

The content of the deterioration-preventing agent is preferably 0.01 wt% to 10 wt%, more preferably 0.05 wt% to 7 wt%, still more preferably 0.1 wt% to 5 wt%, particularly preferably 0.1 wt% to 3 wt%, most preferably 0.1 wt% to 1 wt% with respect to the polyol (A). Adjusting the content of the deterioration-preventing agent within the range can make the pressure-sensitive adhesive additionally excellent in adhesive residue-preventing property. Specifically, even when the pressure-sensitive adhesive is stored in a warmed state after having been attached to an adherend, an adhesive residue occurs on the adherend in an additionally hard manner. When the content of the deterioration-preventing agent is excessively small, it may become impossible to express the adhesive residue-preventing property sufficiently. When the content of the deterioration-preventing agent is excessively large, the following problems may arise: a disadvantage in terms of cost appears, pressure-sensitive adhesive characteristics cannot be maintained, or the adherend is contaminated.

Examples of the antioxidant include a radical chain inhibitor and a peroxide decomposer.

Examples of the radical chain inhibitor include a phenol-based antioxidant and an amine-based antioxidant.

Examples of the peroxide decomposer include a sulfur-based antioxidant and a phosphorus-based antioxidant.

Examples of the phenol-based antioxidant include a monophenol-based antioxidant, a bisphenol-based antioxidant, and a high-molecular-weight phenol-based antioxidant.

Examples of the monophenol-based antioxidant include 2,6-di-t-butyl-p-cresol, butylated hydroxyanisole, 2,6-di-t-butyl-4-ethylphenol, and stearin-β-(3,5-di-t-butyl-4-hydroxyphenyl)propionate.

Examples of the bisphenol-based antioxidant include 2,2'-methylenebis(4-methyl-6-t-butylphenol), 2,2'-methylenebis(4-ethyl-6-t-butylphenol), 4,4'-thiobis(3-methyl-6-t-butylphenol), 4,4'-butylidenebis(3-methyl-6-t-butylphenol), and 3,9-bis[1,1-dimethyl-2-[β-(3-t-butyl-4-hydroxy-5-methylphenyl) propionyloxy]ethyl]2,4,8,10-tetraoxaspiro[5.5]undecane.

Examples of the high-molecular-weight phenol-based antioxidant include 1,1,3-tris(2-methyl-4-hydroxy-5-t-butylphenyl)butane, 1,3,5-trimethyl-2,4,6-tris(3,5-di-t-butyl-4-hydroxybenzyl)benz ene, tetrakis-[methylene-3-(3',5'-di-t-butyl-4'-hydroxyphenyl)propi onate]methane, bis[3,3'-bis-(4'-hydroxy-3'-t-butylphenyl)butyric acid] glycol ester, 1,3,5-tris(3',5'-di-t-butyl-4'-hydroxybenzyl)-S-triazine-2,4,6 -(1H,3H,5H)trione, and tocophenol.

Examples of the sulfur-based antioxidant include dilauryl 3,3'-thiodipropionate, dimyristyl 3,3'-thiodipropionate, and distearyl 3,3'-thiodipropionate.

Examples of the phosphorus-based antioxidant include triphenyl phosphite, diphenyl isodecyl phosphite, and phenyl diisodecyl phosphite.

Examples of the UV absorbing agent include a benzophenone-based UV absorbing agent, a benzotriazole-based UV absorbing agent, a salicylic acid-based UV absorbing agent, an oxalic anilide-based UV absorbing agent, a cyanoacrylate-based UV absorbing agent, and a triazine-based UV absorbing agent.

Examples of the benzophenone-based UV absorbing agent include 2,4-dihydroxybenzophenone, 2-hydroxy-4-methoxybenzophenone, 2-hydroxy-4-octoxybenzophenone, 2-hydroxy-4-dodecyloxybenzophenone, 2,2'-dihydroxy-4-dimethoxybenzophenone, 2,2'-dihydroxy-4,4'-dimethoxybenzophenone, 2-hydroxy-4-methoxy-5-sulfobenzophenone, and bis(2-methoxy-4-hydroxy-5-benzoylphenyl)methane.

Examples of the benzotriazole-based UV absorbing agent include 2-(2'-hydroxy-5'-methylphenyl)benzotriazole, 2-(2'-hydroxy-5'-tert-butylphenyl)benzotriazole, 2-(2'-hydroxy-3',5'-di-tert-butylphenyl)benzotriazole, 2-(2'-hydroxy-3'-tert-butyl-5'-methylphenyl)-5-chlorobenzotria zole, 2-(2'-hydroxy-3',5'-di-tert-butylphenyl)5-chlorobenzotriazole, 2-(2'-hydroxy-3',5'-di-tert-amylphenyl)benzotriazole, 2-(2'-hydroxy-4'-octoxyphenyl)benzotriazole, 2-[2'-hydroxy-3'-(3'',4'',5'',6''-tetrahydrophthalimidomethyl) -5'-methylphenyl]benzotriazole, 2,2'-methylenebis[4-(1,1,3,3-tetramethylbutyl)-6-(2H-benzotria zole-2-yl)phenol], and 2-(2'-hydroxy-5'-methacryloxyphenyl)-2H-benzotriazole.

Examples of the salicylic acid-based UV absorbing agent include phenyl salicylate, p-tert-butylphenyl salicylate, and p-octylphenyl salicylate.

Examples of the cyanoacrylate-based UV absorbing agent include 2-ethylhexyl-2-cyano-3,3'-diphenyl acrylate, and ethyl-2-cyano-3,3'-diphenyl acrylate.

Examples of the light stabilizer include a hindered amine-based light stabilizer and a UV stabilizer.

Examples of the hindered amine-based light stabilizer may include [bis(2,2,6,6-tetramethyl-4-piperidyl) sebacate], bis(1,2,2,6,6-pentamethyl-4-piperidyl) sebacate, and methyl 1,2,2,6,6-pentamethyl-4-piperidyl sebacate.

Examples of the UV stabilizer include nickel bis(octylphenyl)sulfide, [2,2'-thiobis(4-tert-octylphenolate)]-n-butylaminenickel, nickel complex-3,5-di-tert-butyl-4-hydroxybenzyl-phosphoric acid monoethylate, nickel dibutyldithiocarbamate, a benzoate-type quencher, and nickel dibutyldithiocarbamate.

The polyurethane-based resin preferably contains a fatty acid ester. When the polyurethane-based resin contains the fatty acid ester, the wetting rate of the pressure-sensitive adhesive can increase. The number of kinds of the fatty acid esters may be only one, or may be two or more.

The content of the fatty acid ester is preferably 5 wt% to 50 wt%, more preferably 7 wt% to 40 wt%, still more preferably 8 wt% to 35 wt%, particularly preferably 9 wt% to 30 wt%, most preferably 10 wt% to 20 wt% with respect to the polyol (A). Adjusting the content of the fatty acid ester within the range can additionally increase the wetting rate. When the content of the fatty acid ester is excessively small, it may be impossible to increase the wetting rate sufficiently. When the content of the fatty acid ester is excessively large, the following problems may arise: a disadvantage in terms of cost appears, pressure-sensitive adhesive characteristics cannot be maintained, or an adherend is contaminated.

The fatty acid ester has a number-average molecular weight Mn of preferably 200 to 400, more preferably 210 to 395, still more preferably 230 to 380, particularly preferably 240 to 360, most preferably 270 to 340. Adjusting the number-average molecular weight Mn of the fatty acid ester within the range can additionally increase the wetting rate. In the case where the number-average molecular weight Mn of the fatty acid ester is excessively small, the wetting rate may not increase even when the number of parts of the ester to be added is large. When the number-average molecular weight Mn of the fatty acid ester is excessively large, the curability of the pressure-sensitive adhesive at the time of its drying may deteriorate to adversely affect not only its wetting characteristic but also other pressure-sensitive adhesive characteristics.

Any appropriate fatty acid ester may be adopted as the fatty acid ester as long as the effects of the present invention are not impaired. Examples of such fatty acid ester include a polyoxyethylene bisphenol A lauric acid ester, butyl stearate, 2-ethylhexyl palmitate, 2-ethylhexyl stearate, behenic acid monoglyceride, cetyl 2-ethylhexanoate, isopropyl myristate, isopropyl palmitate, cholesteryl isostearate, lauryl methacrylate, coconut fatty acid methyl ester, methyl laurate, methyl oleate, methyl stearate, myristyl myristate, octyldodecyl myristate, pentaerythritol monooleate, pentaerythritol monostearate, pentaerythritol tetrapalmitate, stearyl stearate, isotridecyl stearate, 2-ethylhexanoic acid triglyceride, butyl laurate, and octyl oleate.

The polyurethane-based resin preferably contains a leveling agent. When the polyurethane-based resin contains the leveling agent, external appearance unevenness due to orange peel can be prevented. The number of kinds of the leveling agents may be only one, or may be two or more.

The content of the leveling agent is preferably 0.001 wt% to 1 wt%, more preferably 0.002 wt% to 0.5 wt%, still more preferably 0.003 wt% to 0.1 wt%, particularly preferably 0.004 wt% to 0.05 wt%, most preferably 0.005 wt% to 0.01 wt% with respect to the polyol (A). Adjusting the content of the leveling agent within the range can additionally prevent the external appearance unevenness due to orange peel. When the content of the leveling agent is excessively small, it may be impossible to prevent the external appearance unevenness due to orange peel. When the content of the leveling agent is excessively large, the following problems may arise: a disadvantage in terms of cost appears, pressure-sensitive adhesive characteristics cannot be maintained, or an adherend is contaminated.

Any appropriate leveling agent can be adopted as the leveling agent as long as the effects of the present invention are not impaired. Examples of such leveling agent include an acrylic leveling agent, a fluorine-based leveling agent, and a silicone-based leveling agent. Examples of the acrylic leveling agent include a Polyflow No. 36, a Polyflow No. 56, a Polyflow No. 85HF, and a Polyflow No. 99C (all of which are manufactured by Kyoeisha Chemical Co., Ltd.). Examples of the fluorine-based leveling agent include a Megafac F470N and a Megafac F556 (all of which are manufactured by DIC Corporation). Examples of the silicone-based leveling agent include a GRANDIC PC4100 (manufactured by DIC Corporation).

The content of the polyfunctional isocyanate compound (B) is preferably 5 wt% to 60 wt%, more preferably 8 wt% to 60 wt%, still more preferably 10 wt% to 60 wt% with respect to the polyol (A). When the content of the polyfunctional isocyanate compound (B) is adjusted within the range, there can be provided a urethane-based pressure-sensitive adhesive excellent in reworkability, initial wettability, and transparency.

An equivalent ratio "NCO group/OH group" between NCO groups and OH groups in the polyol (A) and the polyfunctional isocyanate compound (B) is preferably 1.0 to 5.0, more preferably 1.2 to 4.0, still more preferably 1.5 to 3.5, particularly preferably 1.8 to 3.0. When the equivalent ratio "NCO group/OH group" is adjusted within the range, there can be provided a urethane-based pressure-sensitive adhesive excellent in reworkability, initial wettability, and transparency.

Any appropriate method such as a urethane-forming reaction method involving using bulk polymerization, solution polymerization, or the like may be adopted as a method of obtaining the polyurethane-based resin by curing the composition containing the polyol (A) and the polyfunctional isocyanate compound (B) as long as the effects of the present invention are not impaired.

In order to cure the composition containing the polyol (A) and the polyfunctional isocyanate compound (B), a catalyst is preferably used. Examples of such catalyst include an organometallic compound and a tertiary amine compound.

Examples of the organometallic compound may include an iron-based compound, a tin-based compound, a titanium-based compound, a zirconium-based compound, a lead-based compound, a cobalt-based compound, and a zinc-based compound. Of those, an iron-based compound and a tin-based compound are preferred from the viewpoints of a reaction rate and the pot life of the pressure-sensitive adhesive layer.

Examples of the iron-based compound include iron acetylacetonate and iron 2-ethylhexanoate.

Examples of the tin-based compound include dibutyltin dichloride, dibutyltin oxide, dibutyltin dibromide, dibutyltin maleate, dibutyltin dilaurate, dibutyltin diacetate, dibutyltin sulfide, tributyltin methoxide, tributyltin acetate, triethyltin ethoxide, tributyltin ethoxide, dioctyltin oxide, dioctyltin dilaurate, tributyltin chloride, tributyltin trichloroacetate, and tin 2-ethylhexanoate.

Examples of the titanium-based compound include dibutyltitanium dichloride, tetrabutyl titanate, and butoxytitanium trichloride.

Examples of the zirconium-based compound include zirconium naphthenate and zirconium acetylacetonate.

Examples of the lead-based compound include lead oleate, lead 2-ethylhexanoate, lead benzoate, and lead naphthenate.

Examples of the cobalt-based compound include cobalt 2-ethylhexanoate and cobalt benzoate.

Examples of the zinc-based compound include zinc naphthenate and zinc 2-ethylhexanoate.

Examples of the tertiary amine compound include triethylamine, triethylenediamine, and 1,8-diazabicyclo[5.4.0]undec-7-ene.

The number of kinds of the catalysts may be only one, or may be two or more. In addition, the catalyst may be used in combination with a cross-linking retardant or the like. The amount of the catalyst is preferably 0.02 wt% to 0.10 wt%, more preferably 0.02 wt% to 0.08 wt%, still more preferably 0.02 wt% to 0.06 wt%, particularly preferably 0.02 wt% to 0.05 wt% with respect to the polyol (A). When the amount of the catalyst is adjusted within the range, there can be provided a urethane-based pressure-sensitive adhesive excellent in reworkability, initial wettability, and transparency.

The urethane-based pressure-sensitive adhesive of the present invention may contain any appropriate other component in addition to the polyurethane-based resin as described above as long as the effects of the present invention are not impaired. Examples of such other component include a resin component other than the polyurethane-based resin, a tackifier, an inorganic filler, an organic filler, metal powder, a pigment, a foil-shaped material, a softener, a plasticizer, an age resistor, a conductive agent, a UV absorbing agent, an antioxidant, a light stabilizer, a surface lubricating agent, a leveling agent, a corrosion inhibitor, a heat stabilizer, a polymerization inhibitor, a lubricant, and a solvent.

The urethane-based pressure-sensitive adhesive of the present invention has an adhesion to a glass plate of preferably 0.5 N/25 mm or less, more preferably 0.005 N/25 mm to 0.5 N/25 mm, still more preferably 0.005 N/25 mm to 0.4 N/25 mm, particularly preferably 0.005 N/25 mm to 0.3 N/25 mm, most preferably 0.01 N/25 mm to 0.2 N/25 mm in terms of an initial adhesion immediately after its attachment to the glass plate. When the initial adhesion falls within the range, the urethane-based pressure-sensitive adhesive of the present invention has moderate initial pressure-sensitive adhesiveness and hence can express additionally excellent reworkability. It should be noted that the measurement of the initial adhesion is described later.

The urethane-based pressure-sensitive adhesive of the present invention has an adhesion to a glass plate of preferably 0.5 N/25 mm or less, more preferably 0.005 N/25 mm to 0.5 N/25 mm, still more preferably 0.005 N/25 mm to 0.4 N/25 mm, particularly preferably 0.005 N/25 mm to 0.3 N/25 mm, most preferably 0.01 N/25 mm to 0.2 N/25 mm after being attached to the glass plate and stored at 50°C for 3 days. When the adhesion falls within the range, the urethane-based pressure-sensitive adhesive of the present invention can express additionally excellent reworkability. It should be noted that the measurement of the adhesion is described later.

The urethane-based pressure-sensitive adhesive of the present invention has an adhesion to a glass plate of preferably 0.5 N/25 mm or less, more preferably 0.005 N/25 mm to 0.5 N/25 mm, still more preferably 0.005 N/25 mm to 0.4 N/25 mm, particularly preferably 0.005 N/25 mm to 0.3 N/25 mm, most preferably 0.01 N/25 mm to 0.2 N/25 mm after being attached to the glass plate and stored at 60°C and 92%RH for 3 days. When the adhesion falls within the range, the urethane-based pressure-sensitive adhesive of the present invention can express additionally excellent reworkability. It should be noted that the measurement of the adhesion is described later.

The urethane-based pressure-sensitive adhesive of the present invention has an adhesion to a glass plate of preferably 0.5 N/25 mm or less, more preferably 0.005 N/25 mm to 0.5 N/25 mm, still more preferably 0.005 N/25 mm to 0.4 N/25 mm, particularly preferably 0.005 N/25 mm to 0.3 N/25 mm, most preferably 0.01 N/25 mm to 0.2 N/25 mm under any one of the following conditions: immediately after the attachment to the glass plate, after being attached to the glass plate and stored at 50°C for 3 days, and after being attached to the glass plate and stored at 60°C and 92%RH for 3 days. When the adhesion falls within the range, the urethane-based pressure-sensitive adhesive of the present invention can express additionally excellent reworkability.

The urethane-based pressure-sensitive adhesive of the present invention preferably has high transparency. When the urethane-based pressure-sensitive adhesive of the present invention has high transparency, an inspection or the like can be accurately performed in a state where the pressure-sensitive adhesive is attached to the surface of an optical member or electronic member. The urethane-based pressure-sensitive adhesive of the present invention has a haze of preferably 5% or less, more preferably 4% or less, still more preferably 3% or less, particularly preferably 2% or less, most preferably 1% or less.

### <<B. Surface protective film>>

A surface protective film of the present invention is a surface protective film to be preferably used in the surface protection of an optical member or electronic member. The surface protective film of the present invention has a base material layer and a pressure-sensitive adhesive layer, and the pressure-sensitive adhesive layer contains the urethane-based pressure-sensitive adhesive of the present invention.

FIG. **1** is a schematic sectional view of a surface protective film according to a preferred embodiment of the present invention. A surface protective film **10** has a base material layer **1** and a pressure-sensitive adhesive layer **2.** The surface protective film of the present invention may further have any appropriate other layer (not shown) as required.

The surface of the base material layer **1** on which the pressure-sensitive adhesive layer **2** is not provided can, for example, be subjected to a release treatment through the addition of a fatty acid amide, a polyethyleneimine, a long-chain alkyl-based additive, or the like to the base material layer, or be provided with a coat layer formed of any appropriate releasing agent such as a silicone-, long-chain alkyl-, or fluorine-based releasing agent for the purpose of, for example, forming a roll body that can be easily rewound.

A release liner having releasability may be attached to the surface protective film of the present invention.

The thickness of the surface protective film of the present invention can be set to any appropriate thickness depending on applications. The thickness is preferably 10 µm to 300 µm, more preferably 15 µm to 250 µm, still more preferably 20 µm to 200 µm, particularly preferably 25 µm to 150 µm from the viewpoint of sufficiently expressing the effects of the present invention.

The surface protective film of the present invention has an adhesion to a glass plate of preferably 0.5 N/25 mm or less, more preferably 0.005 N/25 mm to 0.5 N/25 mm, still more preferably 0. 005 N/25 mm to 0.4 N/25 mm, particularly preferably 0.005 N/25 mm to 0.3 N/25 mm, most preferably 0.01 N/25 mm to 0.2 N/25 mm in terms of an initial adhesion immediately after its attachment to the glass plate. When the initial adhesion falls within the range, the surface protective film of the present invention has moderate initial pressure-sensitive adhesiveness and hence can express additionally excellent reworkability. It should be noted that the measurement of the initial adhesion is described later.

The surface protective film of the present invention has an adhesion to a glass plate of preferably 0.5 N/25 mm or less, more preferably 0. 005 N/25 mm to 0. 5 N/25 mm, still more preferably 0.005 N/25 mm to 0.4 N/25 mm, particularly preferably 0.005 N/25 mm to 0.3 N/25 mm, most preferably 0.01 N/25 mm to 0.2 N/25 mm after being attached to the glass plate and stored at 50°C for 3 days. When the adhesion falls within the range, the surface protective film of the present invention can express additionally excellent reworkability. It should be noted that the measurement of the adhesion is described later.

The surface protective film of the present invention has an adhesion to a glass plate of preferably 0.5 N/25 mm or less, more preferably 0.005 N/25 mm to 0.5 N/25 mm, still more preferably 0.005 N/25 mm to 0.4 N/25 mm, particularly preferably 0.005 N/25 mm to 0.3 N/25 mm, most preferably 0.01 N/25 mm to 0.2 N/25 mm after being attached to the glass plate and stored at 60°C and 92%RH for 3 days. When the adhesion falls within the range, the surface protective film of the present invention can express additionally excellent reworkability. It should be noted that the measurement of the adhesion is described later.

The surface protective film of the present invention has an adhesion to a glass plate of preferably 0.5 N/25 mm or less, more preferably 0.005 N/25 mm to 0.5 N/25 mm, still more preferably 0.005 N/25 mm to 0.4 N/25 mm, particularly preferably 0.005 N/25 mm to 0.3 N/25 mm, most preferably 0.01 N/25 mm to 0.2 N/25 mm under any one of the following conditions: immediately after the attachment to the glass plate, after being attached to the glass plate and stored at 50°C for 3 days, and after being attached to the glass plate and stored at 60°C and 92%RH for 3 days. When the adhesion falls within the range, the surface protective film of the present invention can express additionally excellent reworkability.

The surface protective film of the present invention preferably has high transparency. When the surface protective film of the present invention has high transparency, inspection or the like can be accurately performed under a state in which the film is attached to the surface of an optical member or an electronic member. The surface protective film of the present invention has a haze of preferably 5% or less, more preferably 4% or less, still more preferably 3% or less, particularly preferably 2% or less, most preferably 1% or less.

### <B-1. Pressure-sensitive adhesive layer>

The pressure-sensitive adhesive layer contains the urethane-based pressure-sensitive adhesive of the present invention. The content of the urethane-based pressure-sensitive adhesive of the present invention in the pressure-sensitive adhesive layer is preferably 50 wt% to 100 wt%, more preferably 70 wt% to 100 wt%, still more preferably 90 wt% to 100 wt%, particularly preferably 95 wt% to 100 wt%, most preferably 98 wt% to 100 wt%. Adjusting the content of the urethane-based pressure-sensitive adhesive of the present invention in the pressure-sensitive adhesive layer within the range can provide a surface protective film excellent in reworkability, initial wettability, and transparency.

Any appropriate thickness can be adopted as the thickness of the pressure-sensitive adhesive layer depending on applications. The thickness of the pressure-sensitive adhesive layer is preferably 1 µm to 100 µm, more preferably 3 µm to 50 µm, still more preferably 5 µm to 30 µm.

The pressure-sensitive adhesive layer may be manufactured by any appropriate manufacturing method. An example of such manufacturing method is a method involving applying a composition that is a material for forming the pressure-sensitive adhesive layer onto the base material layer to form the pressure-sensitive adhesive layer on the base material layer. Examples of such application method include roll coating, gravure coating, reverse coating, roll brushing, spray coating, air knife coating, and extrusion coating with a die coater.

### <B-2. Base material layer>

Any appropriate thickness can be adopted as the thickness of the base material layer depending on applications. The thickness of the base material layer is preferably 5 µm to 300 µm, more preferably 10 µm to 250 µm, still more preferably 15 µm to 200 µm, particularly preferably 20 µm to 150 µm.

The base material layer may be a single layer, or may be a laminate of two or more layers. The base material layer may be stretched.

Any appropriate material can be adopted as a material for the base material layer depending on applications. Examples thereof include a plastic, paper, a metal film, and a nonwoven fabric. Of those, the plastic is preferred. The base material layer may be constituted of one kind of material, or may be constituted of two or more kinds of materials. For example, the layer may be constituted of two or more kinds of plastics.

Examples of the plastic include a polyester-based resin, a polyamide-based resin, and a polyolefin-based resin. Examples of the polyester-based resin include a polyethylene terephthalate, a polybutylene terephthalate, and a polyethylene naphthalate. Examples of the polyolefin-based resin include a homopolymer of an olefin monomer and a copolymer of an olefin monomer. Specific examples of the polyolefin-based resin include: a homo-polypropylene; a propylene-based copolymer using an ethylene component as a copolymerization component such as a block-, random-, or graft-based copolymer; a reactor TPO; an ethylene-based polymer such as a low-density, high-density, linear and low-density, or ultralow-density polymer; and an ethylene-based copolymer such as an ethylene-propylene copolymer, an ethylene-vinyl acetate copolymer, an ethylene-methyl acrylate copolymer, an ethylene-ethyl acrylate copolymer, an ethylene-butyl acrylate copolymer, an ethylene-methacrylic acid copolymer, or an ethylene-methyl methacrylate copolymer.

The base material layer can contain any appropriate additive as required. Examples of the additive that can be incorporated into the base material layer include an antioxidant, a UV absorbing agent, a light stabilizer, an antistatic agent, a filler, and a pigment. The kinds, number, and amount of the additives that can be incorporated into the base material layer can be appropriately set depending on purposes. In particular, when the material for the base material layer is a plastic, several of the additives are preferably incorporated for the purpose of, for example, deterioration prevention. From the viewpoint of, for example, an improvement in weatherability, particularly preferred examples of the additive include an antioxidant, a UV absorbing agent, a light stabilizer, and a filler.

Any appropriate antioxidant can be adopted as the antioxidant. Examples of such antioxidant include a phenol-based antioxidant, a phosphorus-based processing heat stabilizer, a lactone-based processing heat stabilizer, a sulfur-based heat stabilizer, and a phenol-phosphorus-based antioxidant. The content of the antioxidant is preferably 1 wt% or less, more preferably 0.5 wt% or less, still more preferably 0.01 wt% to 0.2 wt% with respect to the base resin of the base material layer (when the base material layer is a blend, the blend is the base resin).

Any appropriate UV absorbing agent can be adopted as the UV absorbing agent. Examples of such UV absorbing agent include a benzotriazole-based UV absorbing agent, a triazine-based UV absorbing agent, and a benzophenone-based UV absorbing agent. The content of the UV absorbing agent is preferably 2 wt% or less, more preferably 1 wt% or less, still more preferably 0.01 wt% to 0.5 wt% with respect to the base resin forming the base material layer (when the base material layer is a blend, the blend is the base resin).

Any appropriate light stabilizer can be adopted as the light stabilizer. Examples of such light stabilizer include a hindered amine-based light stabilizer and a benzoate-based light stabilizer. The content of the light stabilizer is preferably 2 wt% or less, more preferably 1 wt% or less, still more preferably 0.01 wt% to 0.5 wt% with respect to the base resin forming the base material layer (when the base material layer is a blend, the blend is the base resin).

Any appropriate filler can be adopted as the filler. Examples of such filler include inorganic fillers. Specific examples of the inorganic fillers include carbon black, titanium oxide, and zinc oxide. The content of the filler is preferably 20 wt% or less, more preferably 10 wt% or less, still more preferably 0.01 wt% to 10 wt% with respect to the base resin forming the base material layer (when the base material layer is a blend, the blend is the base resin).

Preferred examples of the additive further include inorganic, low-molecular weight-based, and high-molecular weight-based antistatic agents such as a surfactant, an inorganic salt, a polyhydric alcohol, a metal compound, and carbon intended to impart antistatic property. Of those, a high-molecular weight-based antistatic agent and carbon are preferred from the viewpoints of contamination and the maintenance of pressure-sensitive adhesiveness.

### <B-3. Method of manufacturing surface protective film>

The surface protective film of the present invention may be manufactured by any appropriate method. Such manufacturing method may be performed in conformity with any appropriate manufacturing method such as:
(1) a method involving applying a solution or heat-melt of a material for forming the pressure-sensitive adhesive layer (e.g., a composition containing the polyol (A) and the polyfunctional isocyanate compounds (B), which is a raw material for the urethane-based pressure-sensitive adhesive of the present invention) onto the base material layer;
(2) a method in accordance with the method (1) involving applying the solution or heat-melt onto a separator, and transferring the formed pressure-sensitive adhesive layer onto the base material layer;
(3) a method involving extruding a material for forming the pressure-sensitive adhesive layer onto the base material layer, and forming the layer by application;
(4) a method involving extruding the base material layer and the pressure-sensitive adhesive layer in two or more layers;
(5) a method involving laminating the base material layer with a single layer, i.e., the pressure-sensitive adhesive layer or a method involving laminating the base material layer with two layers, i.e., the pressure-sensitive adhesive layer and a laminate layer;
   or
(6) a method involving forming the pressure-sensitive adhesive layer and a material for forming the base material layer such as a film or a laminate layer into a laminate of two or more layers.

### <<C. Application>>

The urethane-based pressure-sensitive adhesive of the present invention can be used in any appropriate application. The urethane-based pressure-sensitive adhesive of the present invention is preferably used as the pressure-sensitive adhesive layer of a surface protective film because the pressure-sensitive adhesive is excellent in reworkability, initial wettability, and transparency. With such procedure, the surface protective film can be suitably used in the surface protection of an optical member or electronic member.

The optical member or electronic member to which the surface protective film of the present invention is attached can be manually attached and peeled any number of times.

### Examples

Hereinafter, the present invention is described specifically by way of Examples. However, the present invention is by no means limited to Examples. It should be noted that test and evaluation methods in Examples and the like are as described below. It should be noted that the term "part (s) " in the following description means "part(s) by weight" unless otherwise specified, and the term "%" in the following description means "wt%" unless otherwise specified.

### <Evaluation of initial wettability>

A surface protective film provided with a separator was cut into a size of 2.5 cm×10.0 cm to produce a test piece. Immediately after the peeling of the separator, the test piece was attached to a glass plate (manufactured by Matsunami Glass Ind., Ltd., trade name: Micro Slide Glass S) by manual work at a speed of 10 m/min, and the presence or absence of an air bubble between the test piece and the glass plate was confirmed. Evaluation was made in accordance with the following criteria.
○: No air bubble is present.
×: A large number of air bubbles are trapped, and the air bubbles cannot be easily removed.

### <Measurement of initial adhesion to glass plate>

A surface protective film was cut into a size of 25 mm wide by 150 mm long to produce a sample for an evaluation.

Under an atmosphere having a temperature of 23°C and a humidity of 50%RH, the pressure-sensitive adhesive layer surface of the sample for an evaluation was attached to a glass plate (manufactured by Matsunami Glass Ind., Ltd., trade name: Micro Slide Glass S) by moving a 2.0-kg roller from one end to the other and back. The resultant was aged under an atmosphere having a temperature of 23°C and a humidity of 50%RH for 30 minutes, and was then measured for its adhesion by being peeled off at a peel angle of 180° and a rate of pulling of 300 mm/min with a universal tensile tester (manufactured by Minebea Co., Ltd., product name: TCM-1kNB).

### <Measurement of adhesion to glass plate 3 days after storage at 50°C and 50%RH>

A sample for an evaluation was produced by the same method as that in the case of the initial an adhesion to the glass plate, and was measured for its adhesion after storage at a temperature of 50°C and a humidity of 50%RH for 3 days by the same method as that in the case of the initial adhesion.

### <Measurement of adhesion to glass plate 3 days after storage at 60°C and 92%RH>

A sample for an evaluation was produced by the same method as that in the case of the initial adhesion to the glass plate, and was measured for its adhesion after storage at a temperature of 60°C and a humidity of 92%RH for 3 days by the same method as that in the case of the initial adhesion.

### <Measurement of adhesion to glass plate 7 days after storage at 50°C and 50%RH>

A sample for an evaluation was produced by the same method as that in the case of the initial adhesion to the glass plate, and was measured for its adhesion after storage at a temperature of 50°C and a humidity of 50%RH for 7 days by the same method as that in the case of the initial adhesion.

### <Measurement of adhesion to glass plate 7 days after storage at 60°C and 90%RH>

A sample for an evaluation was produced by the same method as that in the case of the initial adhesion to the glass plate, and was measured for its adhesion after storage at a temperature of 60°C and a humidity of 90%RH for 7 days by the same method as that in the case of the initial adhesion.

### <Measurement of adhesion to glass plate 7 days after storage at 85°C and 50%RH>

A sample for an evaluation was produced by the same method as that in the case of the initial adhesion to the glass plate, and was measured for its adhesion after storage at a temperature of 85°C and a humidity of 50%RH for 7 days by the same method as that in the case of the initial adhesion.

### <Evaluation of reworkability>

Reworkability was evaluated in accordance with the following criteria.

### (Evaluations of Examples 1 to 22, and Comparative Examples 1 and 2)

○: The adhesion to the glass plate is 0.2 N/25 mm or less under any one of the following conditions: immediately after the attachment to the glass plate, after being attached to the glass plate and stored at 50°C and 50%RH for 3 days, and after being attached to the glass plate and stored at 60°C and 92%RH for 3 days.
Δ: The adhesion to the glass plate is 0.5 N/25 mm or less under any one of the following conditions but exceeds 0.2 N/25 mm under at least one thereof: immediately after the attachment to the glass plate, after being attached to the glass plate and stored at 50°C and 50%RH for 3 days, and after being attached to the glass plate and stored at 60°C and 92%RH for 3 days.
×: The adhesion to the glass plate exceeds 0.5 N/25 mm under at least one of the following conditions: immediately after the attachment to the glass plate, after being attached to the glass plate and stored at 50°C and 50%RH for 3 days, and after being attached to the glass plate and stored at 60°C and 92%RH for 3 days.

### (Evaluations of Examples 31 to 40, 49 to 82, and 94 to 99)

○: The adhesion to the glass plate is 0.2 N/25 mm or less under any one of the following conditions: immediately after the attachment to the glass plate, after being attached to the glass plate and stored at 50°C and 50%RH for 7 days, after being attached to the glass plate and stored at 60°C and 90%RH for 7 days, and after being attached to the glass plate and stored at 85°C and 50%RH for 7 days.
Δ: The adhesion to the glass plate is 0.5 N/25 mm or less under any one of the following conditions but exceeds 0.2 N/25 mm under at least one thereof: immediately after the attachment to the glass plate, after being attached to the glass plate and stored at 50°C and 50%RH for 7 days, after being attached to the glass plate and stored at 60°C and 90%RH for 7 days, and after being attached to the glass plate and stored at 85°C and 50%RH for 7 days.
×: The adhesion to the glass plate exceeds 0. 5 N/25 mm under at least one of the following conditions: immediately after the attachment to the glass plate, after being attached to the glass plate and stored at 50°C and 50%RH for 7 days, after being attached to the glass plate and stored at 60°C and 90%RH for 7 days, and after being attached to the glass plate and stored at 85°C and 50%RH for 7 days.

### <Evaluation of transparency>

A haze was calculated through the use of a haze meter HM-150 (manufactured by MURAKAMI COLOR RESEARCH LABORATORY CO., LTD.) in conformity with JIS-K-7136 on the basis of following equation: haze (%)=(Td/Tt)×100 (Td: diffuse transmittance, Tt: total light transmittance). Transparency was evaluated in accordance with the following criteria.
○: The haze is 3% or less.
Δ: The haze is more than 3% and 10% or less.
×: The haze is more than 10%.

### <Evaluation for adhesive residue 7 days after storage at 50°C and 50%RH>

A sample for an evaluation was produced by the same method as that in the case of the initial adhesion to the glass plate, and was then stored at a temperature of 50°C and a humidity of 50%RH for 7 days. After that, the sample for an evaluation was peeled at a rate of 0.3 m/min and then an evaluation for an adhesive residue was performed in accordance with the following criteria.
○: No adhesive residue occurs on the adherend.
Δ: The adhesive residue occurs on part of the adherend.
×: The adhesive residue occurs on the entire surface of the adherend.

### <Evaluation for adhesive residue 7 days after storage at 60°C and 90%RH>

A sample for an evaluation was produced by the same method as that in the case of the initial adhesion to the glass plate, and was then stored at a temperature of 60°C and a humidity of 90%RH for 7 days. After that, the sample for an evaluation was peeled at a rate of 0. 3 m/min and then an evaluation for an adhesive residue was performed in accordance with the following criteria.
○: No adhesive residue occurs on the adherend.
Δ: The adhesive residue occurs on part of the adherend.
×: The adhesive residue occurs on the entire surface of the adherend.

### <Evaluation for adhesive residue 7 days after storage at 85°C and 50%RH>

A sample for an evaluation was produced by the same method as that in the case of the initial adhesion to the glass plate, and was then stored at a temperature of 85°C and a humidity of 50%RH for 7 days. After that, the sample for an evaluation was peeled at a rate of 0.3 m/min and then an evaluation for an adhesive residue was performed in accordance with the following criteria.
○: No adhesive residue occurs on the adherend.
Δ: The adhesive residue occurs on part of the adherend.
×: The adhesive residue occurs on the entire surface of the adherend.

### <Evaluation for adhesive residue 1 hour after storage at 100°C and 50%RH>

A sample for an evaluation was produced by the same method as that in the case of the initial adhesion to the glass plate, and was then stored at a temperature of 100°C and a humidity of 50%RH for 1 hour. After that, the sample for an evaluation was peeled at a rate of 0.3 m/min and then an evaluation for an adhesive residue was performed in accordance with the following criteria.
○: No adhesive residue occurs on the adherend.
Δ: The adhesive residue occurs on part of the adherend.
×: The adhesive residue occurs on the entire surface of the adherend.

### <Evaluation for adhesive residue 1 hour after storage at 130°C and 50%RH>

A sample for an evaluation was produced by the same method as that in the case of the initial adhesion to the glass plate, and was then stored at a temperature of 130°C and a humidity of 50%RH for 1 hour. After that, the sample for an evaluation was peeled at a rate of 0.3 m/min and then an evaluation for an adhesive residue was performed in accordance with the following criteria.
○: No adhesive residue occurs on the adherend.
Δ: The adhesive residue occurs on part of the adherend.
×: The adhesive residue occurs on the entire surface of the adherend.

### <Evaluation for adhesive residue 1 hour after storage at 150°C and 50%RH>

A sample for an evaluation was produced by the same method as that in the case of the initial adhesion to the glass plate, and was then stored at a temperature of 150°C and a humidity of 50%RH for 1 hour. After that, the sample for an evaluation was peeled at a rate of 0.3 m/min and then an evaluation for an adhesive residue was performed in accordance with the following criteria.
○: No adhesive residue occurs on the adherend.
Δ: The adhesive residue occurs on part of the adherend.
×: The adhesive residue occurs on the entire surface of the adherend.

### <Evaluation for water contact angle 7 days after storage at 50°C and 50%RH>

A sample for an evaluation was produced by the same method as that in the case of the initial adhesion to the glass plate, and was then stored at a temperature of 50°C and a humidity of 50%RH for 7 days. After that, the sample for an evaluation was peeled at a rate of 0.3 m/min, 2 µL of pure water were dropped onto the glass plate, and a dynamic contact angle was measured with a contact angle meter (manufactured by Kyowa Interface Science Co., Ltd., FACE, CA-X model).

### <Evaluation for water contact angle 7 days after storage at 60°C and 90%RH>

A sample for an evaluation was produced by the same method as that in the case of the initial adhesion to the glass plate, and was then stored at a temperature of 60°C and a humidity of 90%RH for 7 days. After that, the sample for an evaluation was peeled at a rate of 0.3 m/min, 2 µL of pure water were dropped onto the glass plate, and a dynamic contact angle was measured with a contact angle meter (manufactured by Kyowa Interface Science Co., Ltd., FACE, CA-X model).

### <Evaluation for water contact angle 7 days after storage at 85°C and 50%RH>

A sample for an evaluation was produced by the same method as that in the case of the initial adhesion to the glass plate, and was then stored at a temperature of 85°C and a humidity of 50%RH for 7 days. After that, the sample for an evaluation was peeled at a rate of 0.3 m/min, 2 µL of pure water were dropped onto the glass plate, and a dynamic contact angle was measured with a contact angle meter (manufactured by Kyowa Interface Science Co., Ltd., FACE, CA-X model).

### <Evaluation for residual adhesive strength>

### <Evaluation for residual adhesive strength 7 days after storage at 50°C and 50%RH>

A sample for an evaluation was produced by the same method as that in the case of the initial adhesion to the glass plate, and was then stored at a temperature of 50°C and a humidity of 50%RH for 7 days. After that, the sample for an evaluation was peeled at a rate of 0.3 m/min. A transparent pressure-sensitive adhesive sheet for optics (CS9662LS: manufactured by Nitto Denko Corporation) backed with a PET base material was attached, and was then crimped under an atmosphere having a temperature of 23°C and a humidity of 50% by reciprocating a 2-kg roller once. 30 Minutes after that, an adhesion A was measured. The adhesion was measured with an AG-IS manufactured by SHIMADZU CORPORATION at a peel angle of 180° and a peel rate of 0.3 m/min, and the average of n measured values (n=2) was adopted. In addition, an adhesion to an untreated glass (i.e., a glass on a surface not subjected to any Sn treatment) was measured by the same operation and the measured value was defined as a reference B. A residual adhesive strength was calculated from the adhesion A and reference B thus obtained by using the equation "(residual adhesive strength of CS9662LS to glass after peeling of sample/residual adhesive strength of CS9662LS to untreated glass)×100 (%)."

### <Evaluation for residual adhesive strength 7 days after storage at 60°C and 90%RH>

A sample for an evaluation was produced by the same method as that in the case of the initial adhesion to the glass plate, and was then stored at a temperature of 60°C and a humidity of 90%RH for 7 days. After that, the sample for an evaluation was peeled at a rate of 0.3 m/min. A transparent pressure-sensitive adhesive sheet for optics (CS9662LS) backed with a PET base material was attached, and was then crimped under an atmosphere having a temperature of 23°C and a humidity of 50% by reciprocating a 2-kg roller once. 30 Minutes after that, an adhesion A was measured. The adhesion was measured with an AG-IS manufactured by SHIMADZU CORPORATION at a peel angle of 180° and a peel rate of 0.3 m/min, and the average of n measured values (n=2) was adopted. In addition, an adhesion to an untreated glass (i.e., a glass on a surface not subjected to any Sn treatment) was measured by the same operation and the measured value was defined as a reference B. A residual adhesive strength was calculated from the adhesion A and reference B thus obtained by using the equation "(residual adhesive strength of CS9662LS to glass after peeling of sample/residual adhesive strength of CS9662LS to untreated glass)×100 (%)."

### <Evaluation for residual adhesive strength 7 days after storage at 85°C and 50%RH>

A sample for an evaluation was produced by the same method as that in the case of the initial adhesion to the glass plate, and was then stored at a temperature of 85°C and a humidity of 50%RH for 7 days. After that, the sample for an evaluation was peeled at a rate of 0.3 m/min. A transparent pressure-sensitive adhesive sheet for optics (CS9662LS) backed with a PET base material was attached, and was then crimped under an atmosphere having a temperature of 23°C and a humidity of 50% by reciprocating a 2-kg roller once. 30 Minutes after that, an adhesion A was measured. The adhesion was measured with an AG-IS manufactured by SHIMADZU CORPORATION at a peel angle of 180° and a peel rate of 0.3 m/min, and the average of n measured values (n=2) was adopted. In addition, an adhesion to an untreated glass (i.e., a glass on a surface not subjected to any Sn treatment) was measured by the same operation and the measured value was defined as a reference B. A residual adhesive strength was calculated from the adhesion A and reference B thus obtained by using the equation "(residual adhesive strength of CS9662LS to glass after peeling of sample/residual adhesive strength of CS9662LS to untreated glass)×100 (%)."

### <Evaluation for initial wetting rate>

A surface protective film was cut into a piece measuring 25 mm wide by 100 mm long, and the piece was defined as a sample for an evaluation. One end portion on a width side was fixed, an unfixed end portion on the width side was lifted, and a time period required for water to spread by 100 mm from the freeing of a hand was measured (unit: s/25 mm×100 mm). After that, a wetting rate was calculated by converting the measured value into a cm²/s unit.

### <Measurement of wetting rate 7 days after storage at 50°C and 50%RH>

A sample for an evaluation was produced by the same method as that in the case of the initial wetting rate, and then a wetting rate 7 days after its storage at a temperature of 50°C and a humidity of 50%RH was measured by the same method as in the case of the initial wetting rate.

### <Evaluation for wetting rate 7 days after storage at 60°C and 90%RH>

A sample for an evaluation was produced by the same method as that in the case of the initial wetting rate, and then a wetting rate 7 days after its storage at a temperature of 60°C and a humidity of 90%RH was measured by the same method as in the case of the initial wetting rate.

### <Evaluation for wetting rate 7 days after storage at 85°C and 50%RH>

A sample for an evaluation was produced by the same method as that in the case of the initial wetting rate, and then a wetting rate 7 days after its storage at a temperature of 80°C and a humidity of 50%RH was measured by the same method as in the case of the initial wetting rate.

### <Evaluation for external appearance unevenness due to orange peel>

An evaluation sample of about an A4 size was prepared. The sample was held to a fluorescent lamp and then the surface of the sample was visually observed, followed by an evaluation for external appearance unevenness due to orange peel in accordance with the following criteria.
o: No external appearance unevenness due to orange peel is observed.
Δ: External appearance unevenness due to orange peel is slightly observed.
×: External appearance unevenness due to orange peel is observed.

### (Example 1)

100 Parts by weight of a PREMINOL S3015 (manufactured by ASAHI GLASS CO., LTD., Mn=15,000), which was a polyol having 3 OH groups, as the polyol (A), 13 parts by weight of a trimethylolpropane/tolylene diisocyanate trimer adduct (manufactured by Nippon Polyurethane Industry Co., Ltd., trade name: CORONATE L) as the polyfunctional isocyanate compound (B), 0.04 part by weight of a catalyst (manufactured by NIHON KAGAKU SANGYO CO., LTD., trade name: Nacem Ferric Iron), and 210 parts by weight of ethyl acetate as a diluent solvent were compounded and then stirred with a disper to provide a urethane-based pressure-sensitive adhesive composition. The resultant urethane-based pressure-sensitive adhesive composition was applied to a base material "Lumirror S10" formed of a polyester resin (thickness: 38 µm, manufactured by Toray Industries, Inc.) with a fountain roll so that its thickness after drying became 12 µm, and then the composition was cured and dried under the conditions of a drying temperature of 130°C and a drying time of 2 minutes. Thus, a pressure-sensitive adhesive layer formed of a urethane-based pressure-sensitive adhesive (1) was produced on the base material.

Next, the silicone-treated surface of a base material formed of a polyester resin having a thickness of 25 µm one surface of which had been subjected to a silicone treatment was attached to the surface of the pressure-sensitive adhesive layer to provide a surface protective film (1).

Table 1 shows the results of the evaluations.

### (Example 2)

A pressure-sensitive adhesive layer formed of a urethane-based pressure-sensitive adhesive (2) was produced on the base material in the same manner as in Example 1 except that: 100 parts by weight of a PREMINOL S3011 (manufactured by ASAHI GLASS CO., LTD., Mn=10,000), which was a polyol having 3 OH groups, were used as the polyol (A); and 10 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (2).

Table 1 shows the results of the evaluations.

### (Example 3)

A pressure-sensitive adhesive layer formed of a urethane-based pressure-sensitive adhesive (3) was produced on the base material in the same manner as in Example 1 except that: 75 parts by weight of a PREMINOL S3015 (manufactured by ASAHI GLASS CO. , LTD. , Mn=15,000), which was a polyol having 3 OH groups, and 25 parts by weight of a SANNIX GP-1500 (manufactured by Sanyo Chemical Industries, Ltd., Mn=1,500), which was a polyol having 3 OH groups, were used as the polyols (A); and 28 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (3).

Table 1 shows the results of the evaluations.

### (Example 4)

A pressure-sensitive adhesive layer formed of a urethane-based pressure-sensitive adhesive (4) was produced on the base material in the same manner as in Example 1 except that: 70 parts by weight of a PREMINOL S3015 (manufactured by ASAHI GLASS CO., LTD., Mn=15,000), which was a polyol having 3 OH groups, 20 parts by weight of a SANNIX GP-1500 (manufactured by Sanyo Chemical Industries, Ltd., Mn=1,500), which was a polyol having 3 OH groups, and 10 parts by weight of an EDP-1100 (manufactured by ADEKA CORPORATION, Mn=1,100), which was a polyol having 4 OH groups, were used as the polyols (A); and 40 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (4).

Table 1 shows the results of the evaluations.

### (Example 5)

A pressure-sensitive adhesive layer formed of a urethane-based pressure-sensitive adhesive (5) was produced on the base material in the same manner as in Example 1 except that: 70 parts by weight of a PREMINOL S3011 (manufactured by ASAHI GLASS CO., LTD., Mn=10,000), which was a polyol having 3 OH groups, 25 parts by weight of a SANNIX GP-5000 (manufactured by Sanyo Chemical Industries, Ltd. , Mn=5,000), which was a polyol having 3 OH groups, and 5 parts by weight of an EDP-1100 (manufactured by ADEKA CORPORATION, Mn=1,100), which was a polyol having 4 OH groups, were used as the polyols (A); and 35 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (5).

Table 1 shows the results of the evaluations.

### (Example 6)

A pressure-sensitive adhesive layer formed of a urethane-based pressure-sensitive adhesive (6) was produced on the base material in the same manner as in Example 1 except that: 70 parts by weight of a PREMINOL S3011 (manufactured by ASAHI GLASS CO., LTD., Mn=10,000), which was a polyol having 3 OH groups, 20 parts by weight of a SANNIX GP-5000 (manufactured by Sanyo Chemical Industries, Ltd., Mn=5,000), which was a polyol having 3 OH groups, and 10 parts by weight of an EDP-1100 (manufactured by ADEKA CORPORATION, Mn=1,100), which was a polyol having 4 OH groups, were used as the polyols (A); and 38 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (6).

Table 1 shows the results of the evaluations.

### (Example 7)

A pressure-sensitive adhesive layer formed of a urethane-based pressure-sensitive adhesive (7) was produced on the base material in the same manner as in Example 1 except that: 70 parts by weight of a PREMINOL S3011 (manufactured by ASAHI GLASS CO., LTD., Mn=10,000), which was a polyol having 3 OH groups, 20 parts by weight of a SANNIX GP-5000 (manufactured by Sanyo Chemical Industries, Ltd. , Mn=5,000), which was a polyol having 3 OH groups, and 10 parts by weight of a UNIOL HS1600D (manufactured by NOF CORPORATION, Mn=1,600), which was a polyol having 6 OH groups, were used as the polyols (A); and 46 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (7).

Table 1 shows the results of the evaluations.

### (Example 8)

A pressure-sensitive adhesive layer formed of a urethane-based pressure-sensitive adhesive (8) was produced on the base material in the same manner as in Example 1 except that: 70 parts by weight of a PREMINOL S3011 (manufactured by ASAHI GLASS CO., LTD., Mn=10,000), which was a polyol having 3 OH groups, and 30 parts by weight of a SANNIX GP-3000 (manufactured by Sanyo Chemical Industries, Ltd., Mn=3,000), which was a polyol having 3 OH groups, were used as the polyols (A); and 26 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (8).

Table 1 shows the results of the evaluations.

### (Example 9)

A pressure-sensitive adhesive layer formed of a urethane-based pressure-sensitive adhesive (9) was produced on the base material in the same manner as in Example 1 except that: 70 parts by weight of a PREMINOL S3011 (manufactured by ASAHI GLASS CO., LTD., Mn=10,000), which was a polyol having 3 OH groups, 25 parts by weight of a SANNIX GP-3000 (manufactured by Sanyo Chemical Industries, Ltd., Mn=3,000), which was a polyol having 3 OH groups, and 5 parts by weight of an EDP-1100 (manufactured by ADEKA CORPORATION, Mn=1,100), which was a polyol having 4 OH groups, were used as the polyols (A); and 35 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (9).

Table 2 shows the results of the evaluations.

### (Example 10)

A pressure-sensitive adhesive layer formed of a urethane-based pressure-sensitive adhesive (10) was produced on the base material in the same manner as in Example 1 except that: 70 parts by weight of a PREMINOL S3011 (manufactured by ASAHI GLASS CO., LTD., Mn=10,000), which was a polyol having 3 OH groups, 20 parts by weight of a SANNIX GP-3000 (manufactured by Sanyo Chemical Industries, Ltd., Mn=3,000), which was a polyol having 3 OH groups, and 10 parts by weight of an EDP-1100 (manufactured by ADEKA CORPORATION, Mn=1,100), which was a polyol having 4 OH groups, were used as the polyols (A); and 42 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (10).

Table 2 shows the results of the evaluations.

### (Example 11)

A pressure-sensitive adhesive layer formed of a urethane-based pressure-sensitive adhesive (11) was produced on the base material in the same manner as in Example 1 except that: 70 parts by weight of a PREMINOL S3011 (manufactured by ASAHI GLASS CO., LTD., Mn=10,000), which was a polyol having 3 OH groups, 25 parts by weight of a SANNIX GP-3000 (manufactured by Sanyo Chemical Industries, Ltd., Mn=3,000), which was a polyol having 3 OH groups, and 5 parts by weight of a UNIOL HS1600D (manufactured by NOF CORPORATION, Mn=1,600), which was a polyol having 6 OH groups, were used as the polyols (A); and 35 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (11).

Table 2 shows the results of the evaluations.

### (Example 12)

A pressure-sensitive adhesive layer formed of a urethane-based pressure-sensitive adhesive (12) was produced on the base material in the same manner as in Example 1 except that: 70 parts by weight of a PREMINOL S3011 (manufactured by ASAHI GLASS CO., LTD., Mn=10,000), which was a polyol having 3 OH groups, 20 parts by weight of a SANNIX GP-3000 (manufactured by Sanyo Chemical Industries, Ltd., Mn=3,000), which was a polyol having 3 OH groups, and 10 parts by weight of a UNIOL HS1600D (manufactured by NOF CORPORATION, Mn=1,600), which was a polyol having 6 OH groups, were used as the polyols (A); and 46 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (12).

Table 2 shows the results of the evaluations.

### (Example 13)

A pressure-sensitive adhesive layer formed of a urethane-based pressure-sensitive adhesive (13) was produced on the base material in the same manner as in Example 1 except that: 90 parts by weight of a PREMINOL S3011 (manufactured by ASAHI GLASS CO. , LTD., Mn=10,000), which was a polyol having 3 OH groups, and 10 parts by weight of a SANNIX GP-1500 (manufactured by Sanyo Chemical Industries, Ltd., Mn=1,500), which was a polyol having 3 OH groups, were used as the polyols (A); and 26 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (13).

Table 2 shows the results of the evaluations.

### (Example 14)

A pressure-sensitive adhesive layer formed of a urethane-based pressure-sensitive adhesive (14) was produced on the base material in the same manner as in Example 1 except that: 80 parts by weight of a PREMINOL S3011 (manufactured by ASAHI GLASS CO., LTD. , Mn=10,000), which was a polyol having 3 OH groups, and 20 parts by weight of a SANNIX GP-1500 (manufactured by Sanyo Chemical Industries, Ltd., Mn=1,500), which was a polyol having 3 OH groups, were used as the polyols (A); and 35 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (14).

Table 2 shows the results of the evaluations.

### (Example 15)

A pressure-sensitive adhesive layer formed of a urethane-based pressure-sensitive adhesive (15) was produced on the base material in the same manner as in Example 1 except that: 75 parts by weight of a PREMINOL S3011 (manufactured by ASAHI GLASS CO., LTD., Mn=10,000), which was a polyol having 3 OH groups, and 25 parts by weight of a SANNIX GP-1500 (manufactured by Sanyo Chemical Industries, Ltd., Mn=1,500), which was a polyol having 3 OH groups, were used as the polyols (A); and 24 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (15).

Table 2 shows the results of the evaluations.

### (Example 16)

A pressure-sensitive adhesive layer formed of a urethane-based pressure-sensitive adhesive (16) was produced on the base material in the same manner as in Example 1 except that: 75 parts by weight of a PREMINOL S3011 (manufactured by ASAHI GLASS CO., LTD., Mn=10,000), which was a polyol having 3 OH groups, and 25 parts by weight of a SANNIX GP-1500 (manufactured by Sanyo Chemical Industries, Ltd., Mn=1,500), which was a polyol having 3 OH groups, were used as the polyols (A); and 48 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (16).

Table 2 shows the results of the evaluations.

### (Example 17)

A pressure-sensitive adhesive layer formed of a urethane-based pressure-sensitive adhesive (17) was produced on the base material in the same manner as in Example 1 except that: 70 parts by weight of a PREMINOL S3011 (manufactured by ASAHI GLASS CO., LTD., Mn=10,000), which was a polyol having 3 OH groups, 25 parts by weight of a SANNIX GP-1500 (manufactured by Sanyo Chemical Industries, Ltd. , Mn=1,500), which was a polyol having 3 OH groups, and 5 parts by weight of an EDP-1100 (manufactured by ADEKA CORPORATION, Mn=1,100), which was a polyol having 4 OH groups, were used as the polyols (A); and 44 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (17).

Table 3 shows the results of the evaluations.

### (Example 18)

A pressure-sensitive adhesive layer formed of a urethane-based pressure-sensitive adhesive (18) was produced on the base material in the same manner as in Example 1 except that: 70 parts by weight of a PREMINOL S3011 (manufactured by ASAHI GLASS CO., LTD., Mn=10,000), which was a polyol having 3 OH groups, 20 parts by weight of a SANNIX GP-1500 (manufactured by Sanyo Chemical Industries, Ltd., Mn=1,500), which was a polyol having 3 OH groups, and 10 parts by weight of an EDP-1100 (manufactured by ADEKA CORPORATION, Mn=1,100), which was a polyol having 4 OH groups, were used as the polyols (A); and 43 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (18).

Table 3 shows the results of the evaluations.

### (Example 19)

A pressure-sensitive adhesive layer formed of a urethane-based pressure-sensitive adhesive (19) was produced on the base material in the same manner as in Example 1 except that: 70 parts by weight of a PREMINOL S3011 (manufactured by ASAHI GLASS CO., LTD., Mn=10,000), which was a polyol having 3 OH groups, 25 parts by weight of a SANNIX GP-1500 (manufactured by Sanyo Chemical Industries, Ltd. , Mn=1,500), which was a polyol having 3 OH groups, and 5 parts by weight of a UNIOL HS1600D (manufactured by NOF CORPORATION, Mn=1,600), which was a polyol having 6 OH groups, were used as the polyols (A); and 49 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (19).

Table 3 shows the results of the evaluations.

### (Example 20)

A pressure-sensitive adhesive layer formed of a urethane-based pressure-sensitive adhesive (20) was produced on the base material in the same manner as in Example 1 except that: 70 parts by weight of a PREMINOL S3011 (manufactured by ASAHI GLASS CO., LTD., Mn=10,000), which was a polyol having 3 OH groups, 20 parts by weight of a SANNIX GP-1500 (manufactured by Sanyo Chemical Industries, Ltd., Mn=1,500), which was a polyol having 3 OH groups, and 10 parts by weight of a UNIOL HS1600D (manufactured by NOF CORPORATION, Mn=1,600), which was a polyol having 6 OH groups, were used as the polyols (A); and 54 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (20).

Table 3 shows the results of the evaluations.

### (Example 21)

A pressure-sensitive adhesive layer formed of a urethane-based pressure-sensitive adhesive (21) was produced on the base material in the same manner as in Example 1 except that: 85 parts by weight of a PREMINOL S3011 (manufactured by ASAHI GLASS CO., LTD., Mn=10,000), which was a polyol having 3 OH groups, 13 parts by weight of a SANNIX GP-3000 (manufactured by Sanyo Chemical Industries, Ltd., Mn=3,000), which was a polyol having 3 OH groups, and 2 parts by weight of a SANNIX GP-1000 (manufactured by Sanyo Chemical Industries, Ltd., Mn=1,000), which was a polyol having 3 OH groups, were used as the polyols (A); and 8.9 parts by weight of a CORONATE HX (Nippon Polyurethane Industry Co., Ltd.), which was a polyfunctional and alicyclic isocyanate compound, were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (21).

Table 3 shows the results of the evaluations.

### (Example 22)

A pressure-sensitive adhesive layer formed of a urethane-based pressure-sensitive adhesive (22) was produced on the base material in the same manner as in Example 1 except that: 85 parts by weight of a PREMINOL S3011 (manufactured by ASAHI GLASS CO., LTD., Mn=10,000), which was a polyol having 3 OH groups, 13 parts by weight of a SANNIX GP-3000 (manufactured by Sanyo Chemical Industries, Ltd., Mn=3,000), which was a polyol having 3 OH groups, and 2 parts by weight of a SANNIX GP-1000 (manufactured by Sanyo Chemical Industries, Ltd., Mn=1,000), which was a polyol having 3 OH groups, were used as the polyols (A) ; and 13.5 parts by weight of a CORONATE HX (Nippon Polyurethane Industry Co., Ltd.), which was a polyfunctional and alicyclic isocyanate compound, were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (22).

Table 3 shows the results of the evaluations.

### (Comparative Example 1)

A pressure-sensitive adhesive layer formed of a urethane-based pressure-sensitive adhesive (C1) was produced on the base material in the same manner as in Example 1 except that: 100 parts by weight of a SANNIX GP-5000 (manufactured by Sanyo Chemical Industries, Ltd., Mn=5,000), which was a polyol having 3 OH groups, were used as the polyol (A); and 26 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (C1).

Table 3 shows the results of the evaluations.

### (Comparative Example 2)

A pressure-sensitive adhesive layer formed of a urethane-based pressure-sensitive adhesive (C2) was produced on the base material in the same manner as in Example 1 except that: 18 parts by weight of a SANNIX GP-1500 (manufactured by Sanyo Chemical Industries, Ltd., Mn=1,500), which was a polyol having 3 OH groups, 12 parts by weight of an EDP-1100 (manufactured by ADEKA CORPORATION, Mn=1, 100), which was a polyol having 4 OH groups, and 70 parts by weight of a SANNIX PP-4000 (manufactured by Sanyo Chemical Industries, Ltd., Mn=4,000), which was a polyol having 2 OH groups, were used as the polyols (A); and 50 parts by weight of a trimethylolpropane/tolylene diisocyanate trimer adduct (manufactured by Nippon Polyurethane Industry Co., Ltd., trade name: CORONATE L) were used as the polyfunctional isocyanate compound (B).

Next, the silicone-treated surface of a base material formed of a polyester resin having a thickness of 25 µm one surface of which had been subjected to a silicone treatment was attached to the surface of the pressure-sensitive adhesive layer to provide a surface protective film (C2).

Table 3 shows the results of the evaluations.

**Table 1**

| | | | Mn | Number of functiona l groups | Exampl e 1 | Exampl e 2 | Exampl e 3 | Exampl e 4 | Exampl e 5 | Exampl e 6 | Exampl e 7 | Exampl e 8 |
|---|---|---|---|---|---|---|---|---|---|---|---|---|
| Polyol (A) | S3015 | | 15,00 0 | 3 | 100 | - | 75 | 70 | - | - | - | - |
| | S3011 | | 10,00 0 | 3 | - | 100 | - | - | 70 | 70 | 70 | 70 |
| | GP-5000 | | 5,000 | 3 | - | - | - | - | 25 | 20 | 20 | - |
| | GP-3000 | | 3,000 | 3 | - | - | - | - | - | - | - | 30 |
| | GP-1500 | | 1,500 | 3 | - | - | 25 | 20 | - | - | - | - |
| | GP-1000 | | 1,000 | 3 | - | - | - | - | - | - | - | - |
| | EDP-110 0 | | 1,1-00 | 4 | - | - | - | 10 | 5 | 10 | - | - |
| | HS1600D | | 1,600 | 6 | - | - | - | - | - | - | 10 | - |
| | PP-4000 | | 4,000 | 2 | - | - | - | - | - | - | - | - |
| Polyfunction al isocyanate compound (B) | CORONAT E L | | 656 | 3 | 13 | 10 | 28 | 40 | 35 | 38 | 46 | 26 |
| | CORONAT E HX | | 504 | 3 | - | - | - | - | - | - | - | - |
| Equivalent | | | | | 2 | 2 | 2 | 2 | 2.5 | 2.5 | 2.5 | 2.5 |
| Catalyst | | | | | 0.04 | 0.04 | 0.04 | 0.04 | 0.04 | 0.04 | 0.04 | 0.04 |
| Adhesion to glass plate (N/25 mm) | | Initial stage | | | 0.08 | 0.12 | 0.04 | 0.03 | 0.08 | 0.08 | 0.08 | 0.09 |
| | | 50°C×3 days | | | 0.23 | 0.28 | 0.18 | 0.17 | 0.38 | 0.31 | 0.27 | 0.17 |
| | | 60°C×92%RH×3 days | | | 0.05 | 0.05 | 0.11 | 0.08 | 0.11 | 0.05 | 0.08 | 0.14 |
| Reworkability | | | | | Δ | Δ | ○ | ○ | Δ | Δ | Δ | ○ |
| Initial wettability | | | | | ○ | ○ | ○ | ○ | ○ | ○ | ○ | ○ |
| Transparency | | | | | ○ | ○ | ○ | Δ | ○ | Δ | Δ | ○ |

**Table 2**

| | | | Mn | Number of functional groups | Example 9 | Example 10 | Example 11 | Example 12 | Example 13 | Example 14 | Example 15 | Example 16 |
|---|---|---|---|---|---|---|---|---|---|---|---|---|
| Polyol (A) | S3015 | | 15,000 | 3 | - | - | - | - | - | - | - | - |
| | S3011 | | 10,000 | 3 | 70 | 70 | 70 | 70 | 90 | 80 | 75 | 75 |
| | GP-5000 | | 5,000 | 3 | - | - | - | - | - | - | - | - |
| | GP-3000 | | 3,000 | 3 | 25 | 20 | 25 | 20 | - | - | - | - |
| | GP-1500 | | 1,500 | 3 | - | - | - | - | 10 | 20 | 25 | 25 |
| | GP-1000 | | 1,000 | 3 | - | - | - | - | - | - | - | - |
| | EDP-1100 | | 1,100 | 4 | 5 | 10 | - | - | - | - | - | - |
| | HS1600D | | 1,600 | 6 | - | - | 5 | 10 | - | - | - | - |
| | PP-4000 | | 4,000 | 2 | - | - | - | - | - | - | - | - |
| polyfunctional isocyanate compound (B) | CORONATE L | | 656 | 3 | 35 | 42 | 35 | 46 | 26 | 35 | 24 | 48 |
| | CORONATE HX | | 504 | 3 | - | - | - | - | - | - | - | - |
| Equivalent | | | | | 2.5 | 2.5 | 2.5 | 2.5 | 2.5 | 2.5 | 1.5 | 3.0 |
| Catalyst | | | | | 0.04 | 0.04 | 0.04 | 0.04 | 0.04 | 0.04 | 0.04 | 0.04 |
| Adhesion to glass plate (N/25 mm) | | Initial stage | | | 0.03 | 0.03 | 0.04 | 0.03 | 0.08 | 0.03 | 0.06 | 0.02 |
| | | 50°C×3 days | | | 0.04 | 0.05 | 0.07 | 0.05 | 0.30 | 0.05 | 0.1.3 | 0.03 |
| | | 60°C×92%RH×3 days | | | 0.05 | 0.03 | 0.05 | 0.04 | 0.10 | 0.04 | 0.06 | 0.02 |
| Reworkability | | | | | ○ | ○ | ○ | ○ | Δ | ○ | ○ | ○ |
| Initial wettability | | | | | ○ | ○ | ○ | ○ | ○ | ○ | ○ | ○ |
| Transparency | | | | | ○ | Δ | ○ | Δ | ○ | ○ | ○ | ○ |

**Table 3**

| | | Mn | Number of functiona 1 groups | Exampl e 17 | Exampl e 18 | Exampl e 19 | Example e 20 | Exampl e 21 | Exampl e 22 | Comparativ e Example 1 | Comparativ e Example 2 |
|---|---|---|---|---|---|---|---|---|---|---|---|
| Polyol (A) | S3015 | 15,00 0 | 3 | - | - | - | - | - | - | - | - |
| | S3011 | 10,00 0 | 3 | 70 | 70 | 70 | 70 | 85 | 85 | - | - |
| | GP-5000 | 5,000 | 3 | - | - | - | - | - | - | 100 | - |
| | GP-3000 | 3,000 | 3 | - | - | - | - | 13 | 13 | - | - |
| | GP-1500 | 1,500 | 3 | 25 | 20 | 25 | 20 | - | - | - | 18 |
| | GP-1000 | 1,000 | 3 | - | - | - | - | 2 | 2 | - | - |
| | EDP-110 0 | 1,100 | 4 | 5 | 10 | - | - | - | - | - | 12 |
| | HS1600D | 1,600 | 6 | - | - | 5 | 10 | - | - | - | - |
| | PP-4000 | 4,000 | 2 | - | - | - | - | - | - | - | 70 |
| Polyfunction al isocyanate compound (B) | CORONAT E L | 656 | 3 | 44 | 43 | 49 | 54 | - | - | 26 | 50 |
| | CORONAT E HX | 504 | 3 | - | - | - | - | 8.9 | 13.5 | - | - |
| Equivalent | | | | 2.5 | 2.0 | 2.5 | 2.5 | 1.2 | 1.8 | 2.0 | 2.0 |
| Catalyst | | | | 0.04 | 0.04 | 0.04 | 0.04 | 0.04 | 0.04 | 0.04 | 0.04 |
| Adhesion to glass plate (N/25 mm) | | Initial stage | | 0.02 | 0.02 | 0.02 | 0.02 | 0.02 | 0.04 | 0.05 | 0.02 |
| | | 50°C×3 days | | 0.03 | 0.03 | 0.03 | 0.04 | 0.06 | 0.08 | 0.54 | 0.02 |
| | | 60°C×92%RH×3 days | | 0.03 | 0.03 | 0.02 | 0.03 | 0.02 | 0.04 | 0.21 | 0.02 |
| Reworkability | | | | ○ | ○ | ○ | ○ | ○ | ○ | × | ○ |
| Initial wettability | | | | ○ | ○ | ○ | ○ | ○ | ○ | × | × |
| Transparency | | | | ○ | Δ | ○ | Δ | ○ | ○ | ○ | ○ |

### (Example 23)

The surface protective film (1) obtained in Example 1 was attached to a polarizing plate (manufactured by NITTO DENKO CORPORATION, trade name: "TEG1465DUHC") as an optical member, to thereby provide an optical member having attached thereto a surface protective film.

### (Example 24)

The surface protective film (3) obtained in Example 3 was attached to a polarizing plate (manufactured by NITTO DENKO CORPORATION, trade name: "TEG1465DUHC") as an optical member, to thereby provide an optical member having attached thereto a surface protective film

### (Example 25)

The surface protective film (8) obtained in Example 8 was attached to a polarizing plate (manufactured by NITTO DENKO CORPORATION, trade name: "TEG1465DUHC") as an optical member, to thereby provide an optical member having attached thereto a surface protective film.

### (Example 26)

The surface protective film (21) obtained in Example 21 was attached to a polarizing plate (manufactured by NITTO DENKO CORPORATION, trade name: "TEG1465DUHC") as an optical member, to thereby provide an optical member having attached thereto a surface protective film.

### (Example 27)

The surface protective film (1) obtained in Example 1 was attached to a conductive film (manufactured by NITTO DENKO CORPORATION, trade name: "ELECRYSTA V270L-TFMP") as an electronic member, to thereby provide an electronic member having attached thereto a surface protective film.

### (Example 28)

The surface protective film (3) obtained in Example 3 was attached to a conductive film (manufactured by NITTO DENKO CORPORATION, trade name: "ELECRYSTA V270L-TFMP") as an electronic member, to thereby provide an electronic member having attached thereto a surface protective film.

### (Example 29)

The surface protective film (8) obtained in Example 8 was attached to a conductive film (manufactured by NITTO DENKO CORPORATION, trade name: "ELECRYSTA V270L-TFMP") as an electronic member, to thereby provide an electronic member having attached thereto a surface protective film.

### (Example 30)

The surface protective film (21) obtained in Example 21 was attached to a conductive film (manufactured by NITTO DENKO CORPORATION, trade name: "ELECRYSTA V270L-TFMP") as an electronic member, to thereby provide an electronic member having attached thereto a surface protective film.

### (Example 31)

85 Parts by weight of a PREMINOL S3011 (manufactured by ASAHI GLASS CO., LTD., Mn=10,000), which was a polyol having 3 OH groups, 13 parts by weight of a SANNIX GP-3000 (manufactured by Sanyo Chemical Industries, Ltd., Mn=3,000), which was a polyol having 3 OH groups, and 2 parts by weight of a SANNIX GP-1000 (manufactured by Sanyo Chemical Industries, Ltd., Mn=1,000), which was a polyol having 3 OH groups, as the polyols (A), 18 parts by weight of a CORONATE HX (Nippon Polyurethane Industry Co., Ltd.), which was a polyfunctional and alicyclic isocyanate compound, as the polyfunctional isocyanate compound (B), 0.04 part by weight of a catalyst (manufactured by NIHON KAGAKU SANGYO CO., LTD. , trade name: Nacem Ferric Iron), 0.10 part by weight of an Irganox 1010 (manufactured by BASF) as an antioxidant, and 210 parts by weight of ethyl acetate as a diluent solvent were compounded and then stirred with a disper to provide a urethane-based pressure-sensitive adhesive composition. The resultant urethane-based pressure-sensitive adhesive composition was applied to a base material "Lumirror S10" formed of a polyester resin (thickness: 38 um, manufactured by Toray Industries, Inc.) with a fountain roll so that its thickness after drying became 12 µm, and then the composition was cured and dried under the conditions of a drying temperature of 130°C and a drying time of 2 minutes. Thus, a pressure-sensitive adhesive layer formed of a urethane-based pressure-sensitive adhesive (31) was produced on the base material.

Next, the silicone-treated surface of a base material formed of a polyester resin having a thickness of 25 µm one surface of which had been subjected to a silicone treatment was attached to the surface of the pressure-sensitive adhesive layer to provide a surface protective film (31).

Table 4 shows the results of the evaluations.

### (Example 32)

A pressure-sensitive adhesive layer formed of a urethane-based pressure-sensitive adhesive (32) was produced on the base material in the same manner as in Example 31 except that 0.20 part by weight of an Irganox 1010 (manufactured by BASF) was used as an antioxidant.

Next, the silicone-treated surface of a base material formed of a polyester resin having a thickness of 25 µm one surface of which had been subjected to a silicone treatment was attached to the surface of the pressure-sensitive adhesive layer to provide a surface protective film (32).

Table 4 shows the results of the evaluations.

### (Example 33)

A pressure-sensitive adhesive layer formed of a urethane-based pressure-sensitive adhesive (33) was produced on the base material in the same manner as in Example 31 except that 0.50 part by weight of an Irganox 1010 (manufactured by BASF) was used as an antioxidant.

Next, the silicone-treated surface of a base material formed of a polyester resin having a thickness of 25 µm one surface of which had been subjected to a silicone treatment was attached to the surface of the pressure-sensitive adhesive layer to provide a surface protective film (33).

Table 4 shows the results of the evaluations.

### (Example 34)

A pressure-sensitive adhesive layer formed of a urethane-based pressure-sensitive adhesive (34) was produced on the base material in the same manner as in Example 31 except that 1.0 part by weight of an Irganox 1010 (manufactured by BASF) was used as an antioxidant.

Next, the silicone-treated surface of a base material formed of a polyester resin having a thickness of 25 µm one surface of which had been subjected to a silicone treatment was attached to the surface of the pressure-sensitive adhesive layer to provide a surface protective film (34).

Table 4 shows the results of the evaluations.

### (Example 35)

A pressure-sensitive adhesive layer formed of a urethane-based pressure-sensitive adhesive (35) was produced on the base material in the same manner as in Example 31 except that 0.08 part by weight of an EMBILIZER OL-1 (dioctyltin dilaurate-based catalyst, manufactured by Tokyo Fine Chemical CO., LTD.) was used as a catalyst.

Next, the silicone-treated surface of a base material formed of a polyester resin having a thickness of 25 µm one surface of which had been subjected to a silicone treatment was attached to the surface of the pressure-sensitive adhesive layer to provide a surface protective film (35).

Table 4 shows the results of the evaluations.

### (Example 36)

A pressure-sensitive adhesive layer formed of a urethane-based pressure-sensitive adhesive (36) was produced on the base material in the same manner as in Example 32 except that 0.08 part by weight of an EMBILIZER OL-1 (dioctyltin dilaurate-based catalyst, manufactured by Tokyo Fine Chemical CO., LTD.) was used as a catalyst.

Next, the silicone-treated surface of a base material formed of a polyester resin having a thickness of 25 µm one surface of which had been subjected to a silicone treatment was attached to the surface of the pressure-sensitive adhesive layer to provide a surface protective film (36).

Table 4 shows the results of the evaluations.

### (Example 37)

A pressure-sensitive adhesive layer formed of a urethane-based pressure-sensitive adhesive (37) was produced on the base material in the same manner as in Example 33 except that 0.08 part by weight of an EMBILIZER OL-1 (dioctyltin dilaurate-based catalyst, manufactured by Tokyo Fine Chemical CO., LTD.) was used as a catalyst.

Next, the silicone-treated surface of a base material formed of a polyester resin having a thickness of 25 µm one surface of which had been subjected to a silicone treatment was attached to the surface of the pressure-sensitive adhesive layer to provide a surface protective film (37).

Table 4 shows the results of the evaluations.

### (Example 38)

A pressure-sensitive adhesive layer formed of a urethane-based pressure-sensitive adhesive (38) was produced on the base material in the same manner as in Example 34 except that 0.08 part by weight of an EMBILIZER OL-1 (dioctyltin dilaurate-based catalyst, manufactured by Tokyo Fine Chemical CO., LTD.) was used as a catalyst.

Next, the silicone-treated surface of a base material formed of a polyester resin having a thickness of 25 µm one surface of which had been subjected to a silicone treatment was attached to the surface of the pressure-sensitive adhesive layer to provide a surface protective film (38).

Table 4 shows the results of the evaluations.

### (Example 39)

A pressure-sensitive adhesive layer formed of a urethane-based pressure-sensitive adhesive (39) was produced on the base material in the same manner as in Example 31 except that no antioxidant was used.

Next, the silicone-treated surface of a base material formed of a polyester resin having a thickness of 25 µm one surface of which had been subjected to a silicone treatment was attached to the surface of the pressure-sensitive adhesive layer to provide a surface protective film (39).

Table 4 shows the results of the evaluations.

### (Example 40)

A pressure-sensitive adhesive layer formed of a urethane-based pressure-sensitive adhesive (40) was produced on the base material in the same manner as in Example 31 except that 0.05 part by weight of an Irganox 1010 (manufactured by BASF) was used as an antioxidant.

Next, the silicone-treated surface of a base material formed of a polyester resin having a thickness of 25 µm one surface of which had been subjected to a silicone treatment was attached to the surface of the pressure-sensitive adhesive layer to provide a surface protective film (40).

Table 4 shows the results of the evaluations.

**Table 4**

| | | Mn | Number of functional groups | Example 31 | Example 32 | Example 33 | Example 34 | Example 35 | Example 36 | Example 37 | Example 38 | Example 39 | Example 40 |
|---|---|---|---|---|---|---|---|---|---|---|---|---|---|
| Polyol (A) | S3011 | 10,000 | 3 | 85 | 85 | 85 | 85 | 85 | 85 | 85 | 85 | 85 | 85 |
| | GP-3000 | 3,000 | 3 | 13 | 13 | 13 | 13 | 13 | 13 | 13 | 13 | 13 | 13 |
| | GP-1000 | 1,000 | 3 | 2 | 2 | 2 | 2 | 2 | 2 | 2 | 2 | 2 | 2 |
| Polyfunctional isocyanate compound (B) | CORONATE HX | 504 | 3 | 18 | 18 | 18 | 18 | 18 | 18 | 18 | 18 | 18 | 18 |
| Equivalent | | | | 2 | 2 | 2 | 2 | 2 | 2 | 2 | 2 | 2 | 2 |
| Catalyst | Nacem Ferric Iron | | | 0.04 | 0.04 | 0.04 | 0.04 | - | - | - | - | 0.04 | 0.04 |
| | EMBILIZER OL-1 | | | - | - | - | - | 0.08 | 0.08 | 0.08 | 0.08 | - | - |
| Deterioration-pr eventing agent | Irganox 1010 | | | 0.10 | 0.20 | 0.50 | 1.0 | 0.10 | 0.20 | 0.50 | 1.0 | - | 0.05 |
| Adhesion to glass plate (N/25 mm) | Initial stage | | | 0.05 | 0.05 | 0.05 | 0.05 | 0.04 | 0.04 | 0.05 | 0.05 | 0.05 | 0.04 |
| | 50°C×7 days | | | 0.07 | 0.05 | 0.06 | 0.07 | 0.04 | 0.05 | 0.04 | 0.04 | 0.09 | 0.05 |
| | 60°C×90%RH×7 days | | | 0.03 | 0.04 | 0.04 | 0.05 | 0.04 | 0.03 | 0.03 | 0.03 | 0.03 | 0.04 |
| | 85°C×7 days | | | 0.09 | 0.09 | 0.09 | 0.09 | 0.06 | 0.05 | 0.07 | 0.06 | 0.20 | 0.08 |
| Adhesive residue | 50°C×7 days | | | ○ | ○ | ○ | ○ | ○ | ○ | ○ | ○ | ○ | ○ |
| | 60°C×90%RH×7 days | | | ○ | ○ | ○ | ○ | ○ | ○ | ○ | ○ | Δ | ○ |
| | 85°C×7 days | | | ○ | ○ | ○ | ○ | ○ | ○ | ○ | ○ | Δ | Δ |
| | 100°C×1 hour | | | ○ | ○ | ○ | ○ | ○ | ○ | ○ | ○ | Δ | Δ |
| | 130°C×1 hour | | | ○ | ○ | ○ | ○ | ○ | ○ | ○ | ○ | Δ | Δ |
| | 150°C×1 hour | | | ○ | ○ | ○ | ○ | ○ | ○ | ○ | ○ | Δ | Δ |
| Reworkability | | | | ○ | ○ | ○ | ○ | ○ | ○ | ○ | ○ | ○ | ○ |
| Initial wettability | | | | ○ | ○ | ○ | ○ | ○ | ○ | ○ | ○ | ○ | ○ |
| Transparency | | | | ○ | ○ | ○ | ○ | ○ | ○ | ○ | ○ | ○ | ○ |

### (Example 41)

The surface protective film (31) obtained in Example 31 was attached to a polarizing plate (manufactured by NITTO DENKO CORPORATION, trade name: "TEG1465DUHC") as an optical member, to thereby provide an optical member having attached thereto a surface protective film.

### (Example 42)

The surface protective film (34) obtained in Example 34 was attached to a polarizing plate (manufactured by NITTO DENKO CORPORATION, trade name: "TEG1465DUHC") as an optical member, to thereby provide an optical member having attached thereto a surface protective film.

### (Example 43)

The surface protective film (35) obtained in Example 35 was attached to a polarizing plate (manufactured by NITTO DENKO CORPORATION, trade name: "TEG1465DUHC") as an optical member, to thereby provide an optical member having attached thereto a surface protective film.

### (Example 44)

The surface protective film (38) obtained in Example 38 was attached to a polarizing plate (manufactured by NITTO DENKO CORPORATION, trade name: "TEG1465DUHC") as an optical member, to thereby provide an optical member having attached thereto a surface protective film.

### (Example 45)

The surface protective film (31) obtained in Example 31 was attached to a conductive film (manufactured by NITTO DENKO CORPORATION, trade name: "ELECRYSTA V270L-TFMP") as an electronic member, to thereby provide an electronic member having attached thereto a surface protective film.

### (Example 46)

The surface protective film (34) obtained in Example 34 was attached to a conductive film (manufactured by NITTO DENKO CORPORATION, trade name: "ELECRYSTA V270L-TFMP") as an electronic member, to thereby provide an electronic member having attached thereto a surface protective film.

### (Example 47)

The surface protective film (35) obtained in Example 35 was attached to a conductive film (manufactured by NITTO DENKO CORPORATION, trade name: "ELECRYSTA V270L-TFMP") as an electronic member, to thereby provide an electronic member having attached thereto a surface protective film.

### (Example 48)

The surface protective film (38) obtained in Example 38 was attached to a conductive film (manufactured by NITTO DENKO CORPORATION, trade name: "ELECRYSTA V270L-TFMP") as an electronic member, to thereby provide an electronic member having attached thereto a surface protective film.

### (Example 49)

85 Parts by weight of a PREMINOL S3011 (manufactured by ASAHI GLASS CO., LTD. , Mn=10,000), which was a polyol having 3 OH groups, 13 parts by weight of a SANNIX GP-3000 (manufactured by Sanyo Chemical Industries, Ltd., Mn=3,000), which was a polyol having 3 OH groups, and 2 parts by weight of a SANNIX GP-1000 (manufactured by Sanyo Chemical Industries, Ltd., Mn=1,000), which was a polyol having 3 OH groups, as the polyols (A), 18 parts by weight of a CORONATE HX (Nippon Polyurethane Industry Co., Ltd.), which was a polyfunctional and alicyclic isocyanate compound, as the polyfunctional isocyanate compound (B), 0.08 part by weight of an EMBILIZEROL-1 (dioctyltin dilaurate-based catalyst, manufactured by Tokyo Fine Chemical CO., LTD.) as a catalyst, 0.50 part by weight of an Irganox 1010 (manufactured by BASF) as an antioxidant, and 210 parts by weight of ethyl acetate as a diluent solvent were compounded and then stirred with a disper to provide a urethane-based pressure-sensitive adhesive composition. The resultant urethane-based pressure-sensitive adhesive composition was applied to a base material "Lumirror S10" formed of a polyester resin (thickness: 38 µm, manufactured by Toray Industries, Inc.) with a fountain roll so that its thickness after drying became 12 µm, and then the composition was cured and dried under the conditions of a drying temperature of 130°C and a drying time of 2 minutes. Thus, a pressure-sensitive adhesive layer formed of a urethane-based pressure-sensitive adhesive (49) was produced on the base material.

Next, the silicone-treated surface of a base material formed of a polyester resin having a thickness of 25 µm one surface of which had been subjected to a silicone treatment was attached to the surface of the pressure-sensitive adhesive layer to provide a surface protective film (49).

Table 5 shows the results of the evaluations.

### (Example 50)

A pressure-sensitive adhesive layer formed of a urethane-based pressure-sensitive adhesive (50) was produced on the base material in the same manner as in Example 49 except that 10 parts by weight of a fatty acid ester (methyl laurate, manufactured by Kao Corporation, trade name: EXCEPARL ML85, Mn=214) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (50).

Table 5 shows the results of the evaluations.

### (Example 51)

A pressure-sensitive adhesive layer formed of a urethane-based pressure-sensitive adhesive (51) was produced on the base material in the same manner as in Example 49 except that 30 parts by weight of a fatty acid ester (methyl laurate, manufactured by Kao Corporation, trade name: EXCEPARL ML85, Mn=214) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (51).

Table 5 shows the results of the evaluations.

### (Example 52)

A pressure-sensitive adhesive layer formed of a urethane-based pressure-sensitive adhesive (52) was produced on the base material in the same manner as in Example 49 except that 50 parts by weight of a fatty acid ester (methyl laurate, manufactured by Kao Corporation, trade name: EXCEPARL ML85, Mn=214) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (52).

Table 5 shows the results of the evaluations.

### (Example 53)

A pressure-sensitive adhesive layer formed of a urethane-based pressure-sensitive adhesive (53) was produced on the base material in the same manner as in Example 49 except that 10 parts by weight of a fatty acid ester (butyl laurate, manufactured by NOF CORPORATION, Mn=256) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (53).

Table 5 shows the results of the evaluations.

### (Example 54)

A pressure-sensitive adhesive layer formed of a urethane-based pressure-sensitive adhesive (54) was produced on the base material in the same manner as in Example 49 except that 30 parts by weight of a fatty acid ester (butyl laurate, manufactured by NOF CORPORATION, Mn=256) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (54).

Table 5 shows the results of the evaluations.

### (Example 55)

A pressure-sensitive adhesive layer formed of a urethane-based pressure-sensitive adhesive (55) was produced on the base material in the same manner as in Example 49 except that 50 parts by weight of a fatty acid ester (butyl laurate, manufactured by NOF CORPORATION, Mn=256) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (55).

Table 5 shows the results of the evaluations.

### (Example 56)

A pressure-sensitive adhesive layer formed of a urethane-based pressure-sensitive adhesive (56) was produced on the base material in the same manner as in Example 49 except that 10 parts by weight of a fatty acid ester (isopropyl myristate, manufactured by Kao Corporation, trade name: EXCEPARL IPM, Mn=270) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (56).

Table 6 shows the results of the evaluations.

### (Example 57)

A pressure-sensitive adhesive layer formed of a urethane-based pressure-sensitive adhesive (57) was produced on the base material in the same manner as in Example 49 except that 15 parts by weight of a fatty acid ester (isopropyl myristate, manufactured by Kao Corporation, trade name: EXCEPARL IPM, Mn=270) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (57).

Table 6 shows the results of the evaluations.

### (Example 58)

A pressure-sensitive adhesive layer formed of a urethane-based pressure-sensitive adhesive (58) was produced on the base material in the same manner as in Example 49 except that 20 parts by weight of a fatty acid ester (isopropyl myristate, manufactured by Kao Corporation, trade name: EXCEPARL IPM, Mn=270) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (58).

Table 6 shows the results of the evaluations.

### (Example 59)

A pressure-sensitive adhesive layer formed of a urethane-based pressure-sensitive adhesive (59) was produced on the base material in the same manner as in Example 49 except that 30 parts by weight of a fatty acid ester (isopropyl myristate, manufactured by Kao Corporation, trade name: EXCEPARL IPM, Mn=270) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (59).

Table 6 shows the results of the evaluations.

### (Example 60)

A pressure-sensitive adhesive layer formed of a urethane-based pressure-sensitive adhesive (60) was produced on the base material in the same manner as in Example 49 except that 50 parts by weight of a fatty acid ester (isopropyl myristate, manufactured by Kao Corporation, trade name: EXCEPARL IPM, Mn=270) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (60).

Table 6 shows the results of the evaluations.

### (Example 61)

A pressure-sensitive adhesive layer formed of a urethane-based pressure-sensitive adhesive (61) was produced on the base material in the same manner as in Example 49 except that 10 parts by weight of a fatty acid ester (methyl oleate, manufactured by NOF CORPORATION, trade name: UNISTAR M182A, Mn=296) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (61).

Table 6 shows the results of the evaluations.

### (Example 62)

A pressure-sensitive adhesive layer formed of a urethane-based pressure-sensitive adhesive (62) was produced on the base material in the same manner as in Example 49 except that 30 parts by weight of a fatty acid ester (methyl oleate, manufactured by NOF CORPORATION, trade name: UNISTAR M182A, Mn=296) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (62).

Table 6 shows the results of the evaluations.

### (Example 63)

A pressure-sensitive adhesive layer formed of a urethane-based pressure-sensitive adhesive (63) was produced on the base material in the same manner as in Example 49 except that 50 parts by weight of a fatty acid ester (methyl oleate, manufactured by NOF CORPORATION, trade name: UNISTAR M182A, Mn=296) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (63).

Table 6 shows the results of the evaluations.

### (Example 64)

A pressure-sensitive adhesive layer formed of a urethane-based pressure-sensitive adhesive (64) was produced on the base material in the same manner as in Example 49 except that 5 parts by weight of a fatty acid ester (isopropyl palmitate, manufactured by Kao Corporation, trade name: EXCEPARL IPP, Mn=299) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (64).

Table 7 shows the results of the evaluations.

### (Example 65)

A pressure-sensitive adhesive layer formed of a urethane-based pressure-sensitive adhesive (65) was produced on the base material in the same manner as in Example 49 except that 10 parts by weight of a fatty acid ester (isopropyl palmitate, manufactured by Kao Corporation, trade name: EXCEPARL IPP, Mn=299) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (65).

Table 7 shows the results of the evaluations.

### (Example 66)

A pressure-sensitive adhesive layer formed of a urethane-based pressure-sensitive adhesive (66) was produced on the base material in the same manner as in Example 49 except that 15 parts by weight of a fatty acid ester (isopropyl palmitate, manufactured by Kao Corporation, trade name: EXCEPARL IPP, Mn=299) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (66).

Table 7 shows the results of the evaluations.

### (Example 67)

A pressure-sensitive adhesive layer formed of a urethane-based pressure-sensitive adhesive (67) was produced on the base material in the same manner as in Example 49 except that 20 parts by weight of a fatty acid ester (isopropyl palmitate, manufactured by Kao Corporation, trade name: EXCEPARL IPP, Mn=299) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (67).

Table 7 shows the results of the evaluations.

### (Example 68)

A pressure-sensitive adhesive layer formed of a urethane-based pressure-sensitive adhesive (68) was produced on the base material in the same manner as in Example 49 except that 30 parts by weight of a fatty acid ester (isopropyl palmitate, manufactured by Kao Corporation, trade name: EXCEPARL IPP, Mn=299) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (68).

Table 7 shows the results of the evaluations.

### (Example 69)

A pressure-sensitive adhesive layer formed of a urethane-based pressure-sensitive adhesive (69) was produced on the base material in the same manner as in Example 49 except that 50 parts by weight of a fatty acid ester (isopropyl palmitate, manufactured by Kao Corporation, trade name: EXCEPARL IPP, Mn=299) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (69).

Table 7 shows the results of the evaluations.

### (Example 70)

A pressure-sensitive adhesive layer formed of a urethane-based pressure-sensitive adhesive (70) was produced on the base material in the same manner as in Example 49 except that 5 parts by weight of a fatty acid ester (butyl stearate, manufactured by Kao Corporation, trade name: EXCEPARL BS, Mn=341) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (70).

Table 8 shows the results of the evaluations.

### (Example 71)

A pressure-sensitive adhesive layer formed of a urethane-based pressure-sensitive adhesive (71) was produced on the base material in the same manner as in Example 49 except that 10 parts by weight of a fatty acid ester (butyl stearate, manufactured by Kao Corporation, trade name: EXCEPARL BS, Mn=341) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (71).

Table 8 shows the results of the evaluations.

### (Example 72)

A pressure-sensitive adhesive layer formed of a urethane-based pressure-sensitive adhesive (72) was produced on the base material in the same manner as in Example 49 except that 15 parts by weight of a fatty acid ester (butyl stearate, manufactured by Kao Corporation, trade name: EXCEPARL BS, Mn=341) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (72).

Table 8 shows the results of the evaluations.

### (Example 73)

A pressure-sensitive adhesive layer formed of a urethane-based pressure-sensitive adhesive (73) was produced on the base material in the same manner as in Example 49 except that 20 parts by weight of a fatty acid ester (butyl stearate, manufactured by Kao Corporation, trade name: EXCEPARL BS, Mn=341) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (73).

Table 8 shows the results of the evaluations.

### (Example 74)

A pressure-sensitive adhesive layer formed of a urethane-based pressure-sensitive adhesive (74) was produced on the base material in the same manner as in Example 49 except that 30 parts by weight of a fatty acid ester (butyl stearate, manufactured by Kao Corporation, trade name: EXCEPARL BS, Mn=341) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (74).

Table 8 shows the results of the evaluations.

### (Example 75)

A pressure-sensitive adhesive layer formed of a urethane-based pressure-sensitive adhesive (75) was produced on the base material in the same manner as in Example 49 except that 50 parts by weight of a fatty acid ester (butyl stearate, manufactured by Kao Corporation, trade name: EXCEPARL BS, Mn=341) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (75).

Table 8 shows the results of the evaluations.

### (Example 76)

A pressure-sensitive adhesive layer formed of a urethane-based pressure-sensitive adhesive (76) was produced on the base material in the same manner as in Example 49 except that 10 parts by weight of a fatty acid ester (octyl oleate, manufactured by NOF CORPORATION, trade name: UNISTAR MB881, Mn=395) were added as a component for a urethane-based pressure-sensitive adhesive composition.

Next, the silicone-treated surface of a base material 1 formed of a polyester resin having a thickness of 25 µm one surface of which had been subjected to a silicone treatment was attached to the surface of the pressure-sensitive adhesive layer to provide a surface protective film (76).

Table 9 shows the results of the evaluations.

### (Example 77)

A pressure-sensitive adhesive layer formed of a urethane-based pressure-sensitive adhesive (77) was produced on the base material in the same manner as in Example 49 except that 30 parts by weight of a fatty acid ester (octyl oleate, manufactured by NOF CORPORATION, trade name: UNISTAR MB881, Mn=395) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (77).

Table 9 shows the results of the evaluations.

### (Example 78)

A pressure-sensitive adhesive layer formed of a urethane-based pressure-sensitive adhesive (78) was produced on the base material in the same manner as in Example 49 except that 50 parts by weight of a fatty acid ester (octyl oleate, manufactured by NOF CORPORATION, trade name: UNISTAR MB881, Mn=395) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (78).

Table 9 shows the results of the evaluations.

### (Example 79)

A pressure-sensitive adhesive layer formed of a urethane-based pressure-sensitive adhesive (79) was produced on the base material in the same manner as in Example 49 except that 1 part by weight of a fatty acid ester (isopropyl myristate, manufactured by Kao Corporation, trade name: EXCEPARL IPM, Mn=270) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (79).

Table 9 shows the results of the evaluations.

### (Example 80)

A pressure-sensitive adhesive layer formed of a urethane-based pressure-sensitive adhesive (80) was produced on the base material in the same manner as in Example 49 except that 5 parts by weight of a fatty acid ester (isopropyl myristate, manufactured by Kao Corporation, trade name: EXCEPARL IPM, Mn=270) were added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (80).

Table 9 shows the results of the evaluations.

### (Example 81)

A pressure-sensitive adhesive layer formed of a urethane-based pressure-sensitive adhesive (81) was produced on the base material in the same manner as in Example 49 except that 1 part by weight of a fatty acid ester (isopropyl palmitate, manufactured by Kao Corporation, trade name: EXCEPARL IPP, Mn=299) was added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (81).

Table 9 shows the results of the evaluations.

### (Example 82)

A pressure-sensitive adhesive layer formed of a urethane-based pressure-sensitive adhesive (82) was produced on the base material in the same manner as in Example 49 except that 1 part by weight of a fatty acid ester (butyl stearate, manufactured by Kao Corporation, trade name: EXCEPARL BS, Mn=341) was added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (82).

Table 9 shows the results of the evaluations.

### (Reference Example 1)

An attempt was made to produce a pressure-sensitive adhesive layer formed of a urethane-based pressure-sensitive adhesive (R1) on the base material in the same manner as in Example 49 except that 10 parts by weight of a fatty acid ester (2-octyldodecyl myristate, manufactured by Kao Corporation, trade name: EXCEPARL OD-M, Mn=509) were added as a component for a urethane-based pressure-sensitive adhesive composition. However, the composition was extremely poor in curability, and even after its curing and drying under the conditions of a drying temperature of 130 °C and a drying time of 2 minutes, an adhesive surface was sticky.

### (Reference Example 2)

An attempt was made to produce a pressure-sensitive adhesive layer formed of a urethane-based pressure-sensitive adhesive (R2) on the base material in the same manner as in Example 49 except that 30 parts by weight of a fatty acid ester (2-octyldodecyl myristate, manufactured by Kao Corporation, trade name: EXCEPARL OD-M, Mn=509) were added as a component for a urethane-based pressure-sensitive adhesive composition. However, the composition was extremely poor in curability, and even after its curing and drying under the conditions of a drying temperature of 130°C and a drying time of 2 minutes, an adhesive surface was sticky.

### (Reference Example 3)

An attempt was made to produce a pressure-sensitive adhesive layer formed of a urethane-based pressure-sensitive adhesive (R3) on the base material in the same manner as in Example 49 except that 50 parts by weight of a fatty acid ester (2-octyldodecyl myristate, manufactured by Kao Corporation, trade name: EXCEPARL OD-M, Mn=509) were added as a component for a urethane-based pressure-sensitive adhesive composition. However, the composition was extremely poor in curability, and even after its curing and drying under the conditions of a drying temperature of 130°C and a drying time of 2 minutes, an adhesive surface was sticky.

**Table 5**

| | | | Mn | Number of functional groups | Example 49 | Example 50 | Example 51 | ' Example 52 | Example 53 | Example 54 | Example 55 |
|---|---|---|---|---|---|---|---|---|---|---|---|
| Polyol (A) | S3011 | | 10,000 | 3 | 85 | 85 | 85 | 85 | 85 | 85 | 85 |
| | GP-3000 | | 3,000 | 3 | 13 | 13 | 13 | 13 | 13 | 13 | 13 |
| | GP-1000 | | 1,000 | 3 | 2 | 2 | 2 | 2 | 2 | 2 | 2 |
| Polyfunctional isocyanate compound (B) | CORONATE HX | | 504 | 3 | 18 | 18 | 18 | 18 | 18 | 18 | 18 |
| Equivalent | | | | | 2 | 2 | 2 | 2 | 2 | 2 | 2 |
| Catalyst | EMBILIZER OL-1 | | | | 0.08 | 0.08 | 0.08 | 0.08 | 0.08 | 0.08 | 0.08 |
| Deterioration-preventing agent | Irganox 1010 | | | | 0.50 | 0.50 | 0.50 | 0.50 | 0.50 | 0.50 | 0.50 |
| Fatty acid ester | Methyl laurate (214) | | | | | 10 | 30 | 50 | | | |
| | Butyl laurate (256) | | | | | | | | 10 | 30 | 50 |
| | Isopropyl myristate (270) | | | | | | | | | | |
| | Methyl oleate (296) | | | | | | | | | | |
| | Isopropyl palmitate (299) | | | | | | | | | | |
| | Butyl stearate (341) | | | | | | | | | | |
| | Octyl oleate (395) | | | | | | | | | | |
| Adhesion to glass plate (N/25 mm) | | Initial stage | | | 0.05 | 0.05 | 0.04 | 0.04 | 0.04 | 0.03 | 0.03 |
| | | 50°C×7 days | | | 0.04 | 0.05 | 0.04 | 0.04 | 0.04 | 0.04 | 0.03 |
| | | 60°C×90%RH×7 days | | | 0.03 | 0.03 | 0.02 | 0.03 | 0.03 | 0.02 | 0.02 |
| | | 85°C×7 days | | | 0.07 | 0.06 | 0.06 | 0.05 | 0.05 | 0.06 | 0.07 |
| | | Judgment | | | ○ | ○ | ○ | ○ | ○ | ○ | ○ |
| Water contact angle (°) | | 50°C×7 days | | | 57 | 66 | 63 | 65 | 66 | 62 | 60 |
| | | 60°C×90%RH×7 days | | | 60 | 67 | 69 | 67 | 76 | 79 | 75 |
| | | 85°C×7 days | | | 67 | 70 | 72 | 72 | 74 | 78 | 71 |
| Residual adhesive strength (%) | | 50°C×7 days | | | 92 | 95 | 85 | 86 | 78 | 84 | 83 |
| | | 60°C×90%RH×7 days | | | 81 | 89 | 81 | 79 | 72 | 67 | 60 |
| | | 85°C×7 days | | | 86 | 75 | 74 | 83 | 71 | 72 | 61 |
| Wetting rate (cm²/s) | | Initial stage | | | 10 | 11 | 11 | 17 | 11 | 11 | 17 |
| | | 50°C×7 days | | | 10 | 11 | 11 | 17 | 11 | 11 | 17 |
| | | 60°C×90%RH×7 days | | | 10 | 11 | 11 | 17 | 11 | 11 | 17 |
| | | 85°C×7 days | | | 10 | 11 | 11 | 17 | 11 | 11 | 17 |
| Initial wettability | | | | | ○ | ○ | ○ | ○ | ○ | ○ | ○ |
| Transparency | | | | | ○ | ○ | ○ | ○ | ○ | ○ | ○ |

**Table 6**

| | | | Mn | Number of functional groups | Example 56 | Example 57 | Example 58 | Example 59 | Example 60 | Example 61 | Example 62 | Example 63 |
|---|---|---|---|---|---|---|---|---|---|---|---|---|
| Polyol (A) | S3011 | | 10,000 | 3 | 85 | 85 | 85 | 85 | 85 | 85 | 85 | 85 |
| | GP-3000 | | 3,000 | 3 | 13 | 13 | 13 | 13 | 13 | 13 | 13 | 13 |
| | GP-1000 | | 1,000 | 3 | 2 | 2 | 2 | 2 | 2 | 2 | 2 | 2 |
| Polyfunctional isocyanate compound (B) | CORONATE HX | | 504 | 3 | 18 | 18 | 18 | 18 | 18 | 18 | 18 | 18 |
| Eq uivalent | | | | | 2 | 2 | 2 | 2 | 2 | 2 | 2 | 2 |
| Catalyst | EMBILIZER OL-1 | | | | 0.08 | 0.08 | 0.08 | 0.08 | 0.08 | 0.08 | 0.08 | 0.08 |
| Deterioration-preventing agent | Irganox 1010 | | | | 0.50 | 0.50 | 0.50 | 0.50 | 0.50 | 0.50 | 0.50 | 0.50 |
| Fatty acid ester | Methyl laurate (214) | | | | | | | | | | | |
| | Butyl laurate (256) | | | | | | | | | | | |
| | Isopropyl myristate (270) | | | | 10 | 15 | 20 | 30 | 50 | | | |
| | Methyl oleate (296) | | | | | | | | | 10 | 30 | 50 |
| | Isopropyl palmitate (299) | | | | | | | | | | | |
| | Butyl stearate (341) | | | | | | | | | | | |
| | Octyl oleate (395) | | | | | | | | | | | |
| Adhesion to glass plate (N/25 mm) | | Initial stage | | | 0.04 | 0.03 | 0.02 | 0.03 | 0.03 | 0.04 | 0.03 | 0.03 |
| | | 50°C×7 days | | | 0.06 | 0.03 | 0.03 | 0.05 | 0.04 | 0.03 | 0.03 | 0.03 |
| | | 60°C×90%RH×7 days | | | 0.02 | 0.02 | 0.02 | 0.02 | 0.02 | 0.02 | 0.01 | 0.01 |
| | | 85°C×7 days | | | 0.06 | 0.03 | 0.03 | 0.05 | 0.06 | 0.04 | 0.04 | 0.04 |
| | | Judgment | | | ○ | ○ | ○ | ○ | ○ | ○ | ○ | ○ |
| Water contact angle (°) | | 50°C×7 days | | | 69 | 66 | 69 | 62 | 58 | 67 | 68 | 63 |
| | | 60°C×90%RH×7 days | | | 78 | 79 | 79 | 94 | 83 | 78 | 92 | 80 |
| | | 85°C×7 days | | | 74 | 76 | 70 | 69 | 72 | 79 | 84 | 79 |
| Residual adhesive strength (%) | | 50°C×7 days | | | 89 | 85 | 85 | 88 | 94 | 72 | 83 | 83 |
| | | 60°C×90%RH×7 days | | | 69 | 67 | 72 | 68 | 70 | 74 | 69 | 64 |
| | | 85°C×7 days | | | 76 | 87 | 83 | 76 | 85 | 75 | 72 | 70 |
| Wetting rate (cm²/s) | | Initial stage | | | 11 | 11 | 13 | 17 | 17 | 11 | 17 | 17 |
| | | 50°C×7 days | | | 11 | 11 | 13 | 17 | 17 | 11 | 17 | 17 |
| | | 60°C×90%RH×7 days | | | 11 | 11 | 13 | 17 | 17 | 11 | 17 | 17 |
| | | 85°C×7 days | | | 11 | 11 | 13 | 17 | 17 | 11 | 17 | 17 |
| Initial wettability | | | | | ○ | ○ | ○ | ○ | ○ | ○ | ○ | ○ |
| Transparency | | | | | ○ | ○ | ○ | ○ | ○ | ○ | ○ | ○ |

**Table 7**

| | | | Mn | Number of functional groups | Example 64 | Example 65 | Example 66 | Example 67 | Example 68 | Example 69 |
|---|---|---|---|---|---|---|---|---|---|---|
| Polyol (A) | S3011 | | 10,000 | 3 | 85 | 85 | 85 | 85 | 85 | 85 |
| | GP-3000 | | 3,000 | 3 | 13 | 13 | 13 | 13 | 13 | 13 |
| | GP-1000 | | 1,000 | 3 | 2 | 2 | 2 | 2 | 2 | 2 |
| Polyfunctional isocyanate compound (B) | CORONATE HX | | 504 | 3 | 18 | 18 | 18 | 18 | 18 | 18 |
| Equivalent | | | | | 2 | 2 | 2 | 2 | 2 | 2 |
| Catalyst | EMBILIZER OL-1 | | | | 0.08 | 0.08 | 0.08 | 0.08 | 0.08 | 0.08 |
| Deterioration-preventi ng agent | Irganox 1010 | | | | 0.50 | 0.50 | 0.50 | 0.50 | 0.50 | 0.50 |
| Fatty acid ester | Methyl laurate (214) | | | | | | | | | |
| | Butyl laurate (256) | | | | | | | | | |
| | Isopropyl myristate (270) | | | | | | | | | |
| | Methyl oleate (296) | | | | | | | | | |
| | Isopropyl palmitate (299) | | | | 5 | 10 | 15 | 20 | 30 | 50 |
| | Butyl stearate (341) | | | | | | | | | |
| | Octyl oleate (395) | | | | | | | | | |
| Adhesion to glass plate (N/25 mm) | | Initial stage | | | 0.03 | 0.04 | 0.02 | 0.02 | 0.03 | 0.03 |
| | | 50°C×7 days | | | 0.04 | 0.03 | 0.03 | 0.05 | 0.03 | 0.02 |
| | | 60°C×90%RH×7 days | | | 0.02 | 0.03 | 0.01 | 0.02 | 0.02 | 0.02 |
| | | 85°C×7 days | | | 0.03 | 0.05 | 0.03 | 0.05 | 0.04 | 0.05 |
| | | Judgment | | | ○ | ○ | ○ | ○ | ○ | ○ |
| Water contact angle (°) | | 50°C×7 days | | | 68 | 69 | 69 | 42 | 60 | 68 |
| | | 60°C×90%RH×7 days | | | 77 | 70 | 78 | 46 | 76 | 70 |
| | | 85°C×7 days | | | 76 | 76 | 74 | 74 | 72 | 72 |
| Residual adhesive strength (%) | | 50°C×7 days | | | 85 | 82 | 82 | 67 | 98 | 88 |
| | | 60°C×90%RH×7 days | | | 82 | 80 | 58 | 71 | 84 | 80 |
| | | 85°C×7 days | | | 85 | 82 | 73 | 63 | 87 | 91 |
| Wetting rate (cm²/s) | | Initial stage | | | 11 | 13 | 13 | 17 | 17 | 17 |
| | | 50°C×7 days | | | 11 | 13 | 13 | 17 | 17 | 17 |
| | | 60°C×90%RH×7 days | | | 11 | 13 | 13 | 17 | 17 | 17 |
| | | 85°C×7 days | | | 11 | 13 | 13 | 17 | 17 | 17 |
| Initial wettability | | | | | ○ | ○ | ○ | ○ | ○ | ○ |
| Transparency | | | | | ○ | ○ | ○ | ○ | ○ | ○ |

**Table 8**

| | | | Mn | Number of functional groups | Example 70 | Example 71 | Example 72 | Example 73 | Example 74 | Example 75 |
|---|---|---|---|---|---|---|---|---|---|---|
| Polyol (A) | S3011 | | 10,000 | 3 | 85 | 85 | 85 | 85 | 85 | 85 |
| | GP-3000 | | 3,000 | 3 | 13 | 13 | 13 | 13 | 13 | 13 |
| | GP-1000 | | 1,000 | 3 | 2 | 2 | 2 | 2 | 2 | 2 |
| Polyfunctional isocyanate compound (B) | CORONATE HX | | 504 | 3 | 18 | 18 | 18 | 18 | 18 | 18 |
| Equivalent | | | | | 2 | 2 | 2 | 2 | 2 | 2 |
| Catalyst | EMBILIZER OL-1 | | | | 0.08 | 0.08 | 0.08 | 0.08 | 0.08 | 0.08 |
| Deterioration-preventing agent | Irganox 1010 | | | | 0.50 | 0.50 | 0.50 | 0.50 | 0.50 | 0.50 |
| Fatty acid ester | Methyl laurate (214) | | | | | | | | | |
| | Butyl laurate (256) | | | | | | | | | |
| | Isopropyl myristate (270) | | | | | | | | | |
| | Methyl oleate (296) | | | | | | | | | |
| | Isopropyl palmitate (299) | | | | | | | | | |
| | Butyl stearate (341) | | | | 5 | 10 | 15 | 20 | 30 | 50 |
| | Octyl oleate (395) | | | | | | | | | |
| Adhesion to glass plate (N/25 mm) | | Initial stage | | | 0,03 | 0.04 | 0.03 | 0.02 | 0.03 | 0.03 |
| | | 50°C×7 days | | | 0.03 | 0.04 | 0.03 | 0.02 | 0.03 | 0.03 |
| | | 60°C×90%RH×7 days | | | 0.02 | 0.01 | 0.01 | 0.01 | 0.01 | 0.01 |
| | | 85°C×7 days | | | 0.03 | 0.03 | 0.01 | 0.02 | 0.03 | 0.03 |
| | | Judgment | | | ○ | ○ | ○ | ○ | ○ | ○ |
| Water contact angle (°) | | 50°C×7 days | | | 69 | 68 | 68 | 67 | 62 | 57 |
| | | 60°C×90%RH×7 days | | | 77 | 79 | 80 | 80 | 89 | 93 |
| | | 85°C×7 days | | | 73 | 78 | 75 | 75 | 78 | 75 |
| Residual adhesive strength (%) | | 50°C×7 days | | | 89 | 85 | 86 | 91 | 92 | 91 |
| | | 60°C×90%RH×7 days | | | 68 | 68 | 73 | 77 | 60 | 59 |
| | | 85°C×7 days | | | 80 | 81 | 76 | 85 | 69 | 73 |
| Wetting rate (cm²/s) | | Initial stage | | | 13 | 13 | 17 | 17 | 17 | 17 |
| | | 50°C×7 days | | | 13 | 13 | 17 | 17 | 17 | 17 |
| | | 60°C×90%RH×7 days | | | 13 | 13 | 17 | 17 | 17 | 17 |
| | | 85°C×7 days | | | 13 | 13 | 17 | 17 | 17 | 17 |
| Initial wettability | | | | | ○ | ○ | ○ | ○ | ○ | ○ |
| Transparency | | | | | ○ | ○ | ○ | ○ | ○ | ○ |

**Table 9**

| | | | Mn | Number of functional groups | Example 76 | Example 77 | Example 78 | Example 79 | Example 80 | Example 81 | Example 82 |
|---|---|---|---|---|---|---|---|---|---|---|---|
| Polyol (A) | S3011 | | 10,000 | 3 | 85 | 85 | 85 | 85 | 85 | 85 | 85 |
| | GP-3000 | | 3,000 | 3 | 13 | 13 | 13 | 13 | 13 | 13 | 13 |
| | GP-1000 | | 1,000 | 3 | 2 | 2 | 2 | 2 | 2 | 2 | 2 |
| Polyfunctional isocyanate compound (B) | CORONATE HX | | 504 | 3 | 18 | 18 | 18 | 18 | 18 | 18 | 18 |
| Equivalent | | | | | 2 | 2 | 2 | 2 | 2 | 2 | 2 |
| Catalyst | EMBILIZER OL-1 | | | | 0.08 | 0.08 | 0.08 | 0.08 | 0.08 | 0.08 | 0.08 |
| Deterioration-preventing agent | Irganox 1010 | | | | 0.50 | 0.50 | 0.50 | 0.50 | 0.50 | 0.50 | 0.50 |
| Fatty acid ester | Methyl laurate (214) | | | | | | | | | | |
| | Butyl laurate (256) | | | | | | | | | | |
| | Isopropyl myristate (270) | | | | | | | 1 | 5 | | |
| | Methyl oleate (296) | | | | | | | | | | |
| | Isopropyl palmitate (299) | | | | | | | | | 1 | |
| | Butyl stearate (341) | | | | | | | | | | 1 |
| | Octyl oleate (395) | | | | 10 | 30 | 50 | | | | |
| Adhesion to glass plate (N/25 mm) | | Initial stage | | | 0.04 | 0.03 | 0.02 | 0.04 | 0.04 | 0.03 | 0.04 |
| | | 50°C×7 days | | | 0.04 | 0.03 | 0.02 | 0.04 | 0.04 | 0.04 | 0.04 |
| | | 60°C×90%RH×7 days | | | 0.02 | 0.01 | 0.01 | 0.02 | 0.02 | 0.03 | 0.02 |
| | | 85°C×7 days | | | 0.04 | 0.04 | 0.03 | 0.04 | 0.03 | 0.03 | 0.03 |
| | | Judgment | | | ○ | ○ | ○ | ○ | ○ | ○ | ○ |
| Water contact angle (°) | | 50°C×7 days | | | 67 | 65 | 54 | 66 | 69 | 70 | 64 |
| | | 60°C×90%RH×7 days | | | 86 | 92 | 90 | 77 | 77 | 75 | 77 |
| | | 85°C×7 days | | | 77 | 81 | 75 | 75 | 75 | 75 | 75 |
| Residual adhesive strength (%) | | 50°C×7 days | | | 88 | 72 | 79 | 103 | 99 | 86 | 87 |
| | | 60°C×90%RH×7 days | | | 61 | 51 | 51 | 75 | 67 | 70 | 75 |
| | | 85°C×7 days | | | 61 | 56 | 48 | 90 | 78 | 81 | 81 |
| Wetting rate (cm²/s) | | Initial stage | | | 13 | 17 | 17 | 10 | 10 | 10 | 10 |
| | | 50°C×7 days | | | 13 | 17 | 17 | 10 | 10 | 10 | 10 |
| | | 60°C×90%RH×7 days | | | 13 | 17 | 17 | 10 | 10 | 10 | 10 |
| | | 85°C×7 days | | | 13 | 17 | 17 | 10 | 10 | 10 | 10 |
| Initial wettability | | | | | ○ | ○ | ○ | ○ | ○ | ○ | ○ |
| Transparency | | | | | ○ | ○ | ○ | ○ | ○ | ○ | ○ |

### (Example 83)

The surface protective film (50) obtained in Example 50 was attached to a polarizing plate (manufactured by NITTO DENKO CORPORATION, trade name: "TEG1465DUHC") as an optical member, to thereby provide an optical member having attached thereto a surface protective film.

### (Example 84)

The surface protective film (53) obtained in Example 53 was attached to a polarizing plate (manufactured by NITTO DENKO CORPORATION, trade name: "TEG1465DUHC") as an optical member, to thereby provide an optical member having attached thereto a surface protective film.

### (Example 85)

The surface protective film (56) obtained in Example 56 was attached to a polarizing plate (manufactured by NITTO DENKO CORPORATION, trade name: "TEG1465DUHC") as an optical member, to thereby provide an optical member having attached thereto a surface protective film.

### (Example 86)

The surface protective film (61) obtained in Example 61 was attached to a polarizing plate (manufactured by NITTO DENKO CORPORATION, trade name: "TEG1465DUHC") as an optical member, to thereby provide an optical member having attached thereto a surface protective film.

### (Example 87)

The surface protective film (64) obtained in Example 64 was attached to a polarizing plate (manufactured by NITTO DENKO CORPORATION, trade name: "TEG1465DUHC") as an optical member, to thereby provide an optical member having attached thereto a surface protective film.

### (Example 88)

The surface protective film (70) obtained in Example 70 was attached to a polarizing plate (manufactured by NITTO DENKO CORPORATION, trade name: "TEG1465DUHC") as an optical member, to thereby provide an optical member having attached thereto a surface protective film.

### (Example 86)

The surface protective film (76) obtained in Example 76 was attached to a polarizing plate (manufactured by NITTO DENKO CORPORATION, trade name: "TEG1465DUHC") as an optical member, to thereby provide an optical member having attached thereto a surface protective film.

### (Example 87)

The surface protective film (50) obtained in Example 50 was attached to a conductive film (manufactured by NITTO DENKO CORPORATION, trade name: "ELECRYSTA V270L-TFMP") as an electronic member, to thereby provide an electronic member having attached thereto a surface protective film.

### (Example 88)

The surface protective film (53) obtained in Example 53 was attached to a conductive film (manufactured by NITTO DENKO CORPORATION, trade name: "ELECRYSTA V270L-TFMP") as an electronic member, to thereby provide an electronic member having attached thereto a surface protective film.

### (Example 89)

The surface protective film (56) obtained in Example 56 was attached to a conductive film (manufactured by NITTO DENKO CORPORATION, trade name: "ELECRYSTA V270L-TFMP") as an electronic member, to thereby provide an electronic member having attached thereto a surface protective film.

### (Example 90)

The surface protective film (61) obtained in Example 61 was attached to a conductive film (manufactured by NITTO DENKO CORPORATION, trade name: "ELECRYSTA V270L-TFMP") as an electronic member, to thereby provide an electronic member having attached thereto a surface protective film.

### (Example 91)

The surface protective film (64) obtained in Example 64 was attached to a conductive film (manufactured by NITTO DENKO CORPORATION, trade name: "ELECRYSTA V270L-TFMP") as an electronic member, to thereby provide an electronic member having attached thereto a surface protective film.

### (Example 92)

The surface protective film (70) obtained in Example 70 was attached to a conductive film (manufactured by NITTO DENKO CORPORATION, trade name: "ELECRYSTA V270L-TFMP") as an electronic member, to thereby provide an electronic member having attached thereto a surface protective film.

### (Example 93)

The surface protective film (76) obtained in Example 76 was attached to a conductive film (manufactured by NITTO DENKO CORPORATION, trade name: "ELECRYSTA V270L-TFMP") as an electronic member, to thereby provide an electronic member having attached thereto a surface protective film.

### (Example 94)

A pressure-sensitive adhesive layer formed of a urethane-based pressure-sensitive adhesive (94) was produced on the base material in the same manner as in Example 49 except that 0.1 part by weight of a leveling agent (Polyflow No. 36 (acryl), manufactured by Kyoeisha Chemical Co., Ltd.) was added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (94).

Table 10 shows the results of the evaluations.

### (Example 95)

A pressure-sensitive adhesive layer formed of a urethane-based pressure-sensitive adhesive (95) was produced on the base material in the same manner as in Example 49 except that 0.005 part by weight of a leveling agent (Polyflow No. 36 (acryl), manufactured by Kyoeisha Chemical Co., Ltd.) was added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (95).

Table 10 shows the results of the evaluations.

### (Example 96)

A pressure-sensitive adhesive layer formed of a urethane-based pressure-sensitive adhesive (96) was produced on the base material in the same manner as in Example 49 except that 1 part by weight of a leveling agent (GRANDIC PC4100 (silicone), manufactured by DIC Corporation) was added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (96).

Table 10 shows the results of the evaluations.

### (Example 97)

A pressure-sensitive adhesive layer formed of a urethane-based pressure-sensitive adhesive (97) was produced on the base material in the same manner as in Example 49 except that 0.05 part by weight of a leveling agent (GRANDIC PC4100 (silicone), manufactured by DIC Corporation) was added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (97).

Table 10 shows the results of the evaluations.

### (Example 98)

A pressure-sensitive adhesive layer formed of a urethane-based pressure-sensitive adhesive (98) was produced on the base material in the same manner as in Example 49 except that 0.5 part by weight of a leveling agent (Megafac F470N (fluorine), manufactured by DIC Corporation) was added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (98).

Table 10 shows the results of the evaluations.

### (Example 99)

A pressure-sensitive adhesive layer formed of a urethane-based pressure-sensitive adhesive (99) was produced on the base material in the same manner as in Example 49 except that 0.05 part by weight of a leveling agent (Megafac F470N (fluorine), manufactured by DIC Corporation) was added as a component for a urethane-based pressure-sensitive adhesive composition.

Next, the silicone-treated surface of a base material formed of a polyester resin having a thickness of 25 µm one surface of which had been subjected to a silicone treatment was attached to the surface of the pressure-sensitive adhesive layer to provide a surface protective film (99).

Table 10 shows the results of the evaluations.

**Table 10**

| | | Mn | Number of functional groups | Example 94 | Example 95 | Example 96 | Example 97 | Example 98 | Example 99 |
|---|---|---|---|---|---|---|---|---|---|
| Polyol (A) | S3011 | 10,000 | 3 | 85 | 85 | 85 | 85 | 85 | 85 |
| | GP-3000 | 3,000 | 3 | 13 | 13 | 13 | 13 | 13 | 13 |
| | GP-1000 | 1,000 | 3 | 2 | 2 | 2 | 2 | 2 | 2 |
| Polyfunctional isocyanate compound (B) | CORONATE HX | 504 | 3 | 18 | 18 | 18 | 18 | 18 | 18 |
| Equivalent | | | | 2 | 2 | 2 | 2 | 2 | 2 |
| Catalyst | EMBILIZER OL-1 | | | 0.08 | 0.08 | 0.08 | 0.08 | 0.08 | 0.08 |
| Deterioration-prev enting agent | Irganox 1010 | | | 0.50 | 0.50 | 0.50 | 0.50 | 0.50 | 0.50 |
| Leveling agent | Polyflow No. 36 | | | 0.1 | 0.005 | | | | |
| | GRANDIC PC4100 | | | | | 1 | 0.05 | | |
| | Megafac F470N | | | | | | | 0.5 | 0.05 |
| Adhesion to glass plate (N/25 mm) | | Initial stage | | 0.03 | 0.04 | 0.04 | 0.04 | 0.04 | 0.02 |
| | | 50°C×7 days | | 0.03 | 0.04 | 0.09 | 0.07 | 0.06 | 0.03 |
| | | 60°C×90%RH×7 days | | 0.01 | 0.01 | 0.13 | 0.11 | 0.05 | 0.02 |
| | | 85°C×7 days | | 0.02 | 0.03 | 0.39 | 0.27 | 0.11 | 0.08 |
| | | Judgment | | ○ | ○ | Δ | Δ | ○ | ○ |
| Initial wettability | | | | ○ | ○ | ○ | ○ | ○ | ○ |
| Transparency | | | | ○ | ○ | ○ | ○ | ○ | ○ |
| External appearance unevenness due to orange peel | | | | ○ | ○ | ○ | ○ | ○ | ○ |

### (Example 100)

The surface protective film (94) obtained in Example 94 was attached to a polarizing plate (manufactured by NITTO DENKO CORPORATION, trade name: "TEG1465DUHC") as an optical member, to thereby provide an optical member having attached thereto a surface protective film.

### (Example 101)

The surface protective film (96) obtained in Example 96 was attached to a polarizing plate (manufactured by NITTO DENKO CORPORATION, trade name: "TEG1465DUHC") as an optical member, to thereby provide an optical member having attached thereto a surface protective film.

### (Example 102)

The surface protective film (98) obtained in Example 98 was attached to a polarizing plate (manufactured by NITTO DENKO CORPORATION, trade name: "TEG1465DUHC") as an optical member, to thereby provide an optical member having attached thereto a surface protective film.

### (Example 103)

The surface protective film (94) obtained in Example 94 was attached to a conductive film (manufactured by NITTO DENKO CORPORATION, trade name: "ELECRYSTA V270L-TFMP") as an electronic member, to thereby provide an electronic member having attached thereto a surface protective film.

### (Example 104)

The surface protective film (96) obtained in Example 96 was attached to a conductive film (manufactured by NITTO DENKO CORPORATION, trade name: "ELECRYSTA V270L-TFMP") as an electronic member, to thereby provide an electronic member having attached thereto a surface protective film.

### (Example 105)

The surface protective film (98) obtained in Example 98 was attached to a conductive film (manufactured by NITTO DENKO CORPORATION, trade name: "ELECRYSTA V270L-TFMP") as an electronic member, to thereby provide an electronic member having attached thereto a surface protective film.

The urethane-based pressure-sensitive adhesive of the present invention can be used in any appropriate application. The urethane-based pressure-sensitive adhesive of the present invention is preferably used as the pressure-sensitive adhesive layer of a surface protective film because the pressure-sensitive adhesive is excellent in reworkability, initial wettability, and transparency, and is preferably excellent in adhesive residue-preventing property, preferably has a large wetting rate, and is preferably prevented from showing external appearance unevenness due to orange peel. With such procedure, the surface protective film can be suitably used in the surface protection of an optical member or electronic member.

According to the present invention, there can be provided a urethane-based pressure-sensitive adhesive that is excellent in reworkability, initial wettability, and transparency, and is preferably excellent in adhesive residue-preventing property, that preferably has a large wetting rate, and that is preferably prevented from showing external appearance unevenness due to orange peel. In addition, according to the present invention, there can be provided a surface protective film using such urethane-based pressure-sensitive adhesive in its pressure-sensitive adhesive layer, the surface protective film being excellent in reworkability, initial wettability, and transparency, and being preferably excellent in adhesive residue-preventing property, the surface protective film preferably having a large wetting rate, and the surface protective film being preferably prevented from showing external appearance unevenness due to orange peel. In addition, according to the present invention, there can be provided an optical member or electronic member to which such surface protective film is attached.

## Claims

1. A urethane-based pressure-sensitive adhesive, comprising a polyurethane-based resin, wherein:
the polyurethane-based resin comprises a polyurethane-based resin obtained by curing a composition containing a polyol (A) and a polyfunctional isocyanate compound (B); and
the polyol (A) contains a polyol (A1) having 3 OH groups and a number-average molecular weight Mn of 8,000 to 20,000.

2. A urethane-based pressure-sensitive adhesive according to claim 1, wherein a content of the polyol (A1) in the polyol (A) is 70 wt% or more.

3. A urethane-based pressure-sensitive adhesive according to claim 1 or 2, wherein the polyol (A) contains a polyol (A2) having 3 or more OH groups and a number-average molecular weight Mn of 5,000 or less.

4. A urethane-based pressure-sensitive adhesive according to claim 3, wherein a content of the polyol (A2) in the polyol (A) is 30 wt% or less.

5. A urethane-based pressure-sensitive adhesive according to any one of claims 1 to 4, wherein the polyurethane-based resin contains a deterioration-preventing agent.

6. A urethane-based pressure-sensitive adhesive according to claim 5, wherein a content of the deterioration-preventing agent with respect to the polyol (A) is 0.01 wt% to 10 wt%.

7. A urethane-based pressure-sensitive adhesive according to any one of claims 1 to 6, wherein the polyurethane-based resin contains a fatty acid ester.

8. A urethane-based pressure-sensitive adhesive according to claim 7, wherein a content of the fatty acid ester with respect to the polyol (A) is 5 wt% to 50 wt%.

9. A surface protective film, comprising:
a base material layer; and
a pressure-sensitive adhesive layer,
wherein the pressure-sensitive adhesive layer contains the urethane-based pressure-sensitive adhesive according to claim 1.

10. An optical member, comprising the surface protective film according to claim 9 attached thereto.

11. An electronic member, comprising the surface protective film according to claim 9 attached thereto.
